(19) Europäisches Patentamt / European Patent Office / Office européen des brevets

(11) **EP 4 445 077 B1**

(12) **EUROPEAN PATENT SPECIFICATION**

(45) Date of publication and mention
of the grant of the patent:
**08.04.2026 Bulletin 2026/15**

(21) Application number: **22835257.1**

(22) Date of filing: **08.12.2022**

(51) International Patent Classification (IPC):
*F24F 11/46* (2018.01)        *F24F 11/50* (2018.01)
*F24F 11/523* (2018.01)        *F24F 11/62* (2018.01)
*F24F 11/64* (2018.01)        *G01K 1/20* (2006.01)
*G01K 7/42* (2006.01)        *G06N 7/00* (2023.01)
*G05B 15/02* (2006.01)

(52) Cooperative Patent Classification (CPC):
**F24F 11/46; F24F 11/50; F24F 11/523; F24F 11/62;
F24F 11/64; G01K 1/20; G01K 7/42; G05B 15/02;**
F24F 2110/10; G01K 2201/00; G05B 2219/2614

(86) International application number:
**PCT/EP2022/085020**

(87) International publication number:
**WO 2023/104980 (15.06.2023 Gazette 2023/24)**

(54) **DETERMINATION OF A TEMPERATURE IN A HVAC SYSTEM**

BESTIMMUNG EINER TEMPERATUR IN EINER LUFTTECHNISCHEN ANLAGE

DÉTERMINATION D'UNE TEMPÉRATURE DANS UN SYSTÈME HVAC

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.12.2021 CH 0706792021**

(43) Date of publication of application:
**16.10.2024 Bulletin 2024/42**

(73) Proprietor: **Belimo Holding AG
8340 Hinwil (CH)**

(72) Inventor: **MOTTAS, Yoram
1700 Fribourg (CH)**

(74) Representative: **Keller Schneider
Patent- und Markenanwälte AG
Eigerstrasse 2
Postfach
3000 Bern 14 (CH)**

(56) References cited:
**US-A1- 2016 356 515        US-A1- 2017 059 190
US-A1- 2019 277 525        US-B2- 10 458 671**

**Description**

**Technical field**

The invention relates to a method for determining a temperature in a heating, ventilation, and/or air conditioning (HVAC) system with a temperature sensor. Another aspect of the present invention is directed to a device of HVAC, especially, a room unit, comprising means adapted to execute the method for determining a temperature. Furthermore, the invention is concerned with a computer program comprising instructions to cause the device to execute the steps of the method for determining a temperature.

**Background art**

Heating, ventilation, and air conditioning (HVAC) systems are in use in many public buildings, such as schools, shops, industrial buildings, in office buildings as well as in private homes. Such systems usually comprise sensors, which measure certain parameters of air, coolants or heating fluids circulating in the HVAC system.

For example, sensors of HVAC systems measure certain air parameters in a room, space or zone to be controlled, such as ambient temperature, relative humidity and/or the $CO_2$ content, in order to provide the parameters to a control unit, e.g. a central control unit, of the HVAC system and/or to display it to a user.

In particular, such kind of sensors are included in a room unit, in particular a room control unit or a room sensor, in each controlled room, space or zone of the building, which allows to measure and/or set the respective values by users. Typically, room units for HVAC systems are mounted to a wall of a building in the controlled room, space or zone. The room units may further comprise screens to display information about the set values and the measured parameters.

However, it is an issue with temperature sensors, especially if they are included in rather small devices such as e.g. room units, that the heat generated by microprocessors or other electronic components, which are required to operate the temperature sensor, can affect temperature measurement such that the temperature measured may not accurately reflect the real temperature, e.g. the ambient room temperature. In order to reduce this undesired effect, temperature sensors frequently are thermally isolated from the other electronic components.

In this regard, US 8,197,130 B2 (Siemens) describes for example a temperature sensing device with a housing comprising thermally isolating partition walls at the inside that are configured to thermally isolate the temperature sensor from the residual electronic components. Additionally the printed circuit board of the unit comprises a machined slot between the temperature sensor and the residual electronic components for reducing heat transfer through the printed circuit board.

Nevertheless, thermal isolation of the temperature sensor might negatively affect response times of the temperature sensor upon temperatures changes.

Likewise, when measuring temperatures in fluid lines, ducts, valves, fluid reservoirs, heating units or a cooling units of a HVAC system, similar problems may arise.

Also known from US 2017/059190 A1 (Google Inc.) is a thermostat comprising: a plurality of heat-generating components; a plurality of first temperature sensors, each of the plurality of first temperature sensors being disposed next to a corresponding one of the plurality of heat-generating components; a second temperature sensor that is disposed away from the plurality of heat-generating components; a memory device storing a coefficient matrix; one or more processors that combine a plurality of inputs to calculate an ambient temperature for an enclosure in which the thermostat is installed, the plurality of inputs comprising: readings from the plurality of first temperature sensors; readings from the second temperature sensor; and the coefficient matrix.

Thus, there is still a need to develop improved solutions for HVAC systems, which at least partly overcome the disadvantages mentioned above.

**Summary of the invention**

It is the object of the invention to provide improved solutions for determining the temperature in heating, ventilation, and air conditioning (HVAC) systems. Especially, the solutions should allow to determine rapid and strong temperature changes as precise and as fast as possible. Thereby, the implementation and setup should be kept as simple as possible. Especially, the solutions should be suitable to determine rapid and strong temperature changes with a room unit in a controlled room, space or zone of a building.

A first solution of the invention is specified by the features of claim 1. According to this solution, a method for determining a temperature in a heating, ventilation, and/or air conditioning system, comprises the steps of:

   a) repeatedly measuring the temperature with a temperature sensor to acquire time-resolved raw temperature data;

b) processing the acquired raw temperature data with a correction algorithm that is configured to at least partly compensate for a response time of the temperature sensor at least in selected time periods, to provide processed temperature data;

c) making available the processed temperature data via a user interface, via a machine interface and/or on a data storage medium.

The inventive approach allows to determine the temperature in a heating, ventilation, and/or air conditioning system in a highly precise and fast manner. This even with ordinary room temperature sensors having rather slow response times. Thus, thanks to the inventive processing of the raw temperature data acquired by the temperature sensor with a correction algorithm, the method can be used to determine rapid and strong temperature changes in a reliable manner suitable for applications in HVAC systems. Optionally, the temperature which is repeatedly measured may be an ambient temperature, e.g., of a room which is connected to the heating, ventilation and/or air conditioning system. The raw temperature data may therefore optionally correspond to an ambient temperature.

Furthermore, the inventive approach does not require a special hardware setup. In contrast, it can essentially be implemented with any kind of temperature sensors in all kind of HVAC setups or environments, respectively. Therefore, the inventive solution is highly flexible.

It comes with great surprise that these advantages can be achieved directly with a correction algorithm for the response time of the temperature. Namely, in contrast to other applications, HVAC systems are subject to special conditions with regard to the temperatures to be measured, their changes over time and the precision required.

Especially, the temperature determined in the heating, ventilation, and/or air conditioning system is determined with a room unit, at a fluid line, at a duct, at a valve, at a fluid reservoir, at a heating unit and/or at a cooling unit of a HVAC system.

The "response time of the temperature sensor" is meant to be the time it takes for the sensor to reach 63% of the final value when there is an instant change in temperature, e.g. an increase of 4°C. The response time becomes significant when accurate control is needed. E.g., when a HVAC system is controlled by a feedback signal of the temperature sensor, the system will typically not be able to react to changes faster than the response time of the temperature sensor. For this reason, rapid and transient changes may not be recognized if the response time is too long.

"Repeatedly measuring the temperature" in particular means that the temperature is measured many times, e.g. at least 10 times, in particular at least 100 times, especially at least 1'000 times, in particular at least 10'000 times, or as long as the temperature sensor is being operated. For example, an average measurement frequency can be chosen in the range of 0.03 - 100 Hz, especially 0.07 - 2 Hz, in particular 0.1 - 10 Hz or 0.14 - 0.33 Hz. Thereby, the time intervals between individual measurements can be equidistant and/or irregular. In particular, the measurement of the temperature in step a) takes place at equidistant time intervals, e.g. at time intervals of 0.1 - 30 seconds, especially 0.5 - 15 seconds, in particular 1 - 10 seconds or 3 - 7 seconds.

The response time of the temperature sensor is compensated for at least in selected time periods. This means that the compensation might take place in selected time periods only whereas in other time periods there is no compensation for a response time of the temperature sensor. The selected time periods can for example be defined based on a predefined parameter, an external signal and/or time-controlled. However, it is possible as well that the compensation takes place all the time or during all time periods, respectively.

At least in the selected time periods, the response time of the temperature sensor is at least partly compensated. This means that the response time of the temperature sensor is reduced, e.g. by at least 5%, especially at least 10%, in particular at least 20%, for example at least 30%, particularly at least 50% or at least 60%. For example, the response time of the temperature sensor is reduced by 5 - 75%, in particular by 10 - 65%.

The user interface can in particular comprise a display, e.g. a segment display, an analogue display, a bar display, and/or a dot-matrix display. Especially, the display preferably comprises an electronic paper display, especially covered with a transparent cover. This allows to display temperature data, information about set values and optionally further parameters.

If a display is present, in particular, the display is a touch-screen or is overlaid by a touch sensitive foil. Such a display can be used as an input device to set values, such as e.g. a desired room temperature, ventilation intensity, etc., by users.

A machine interface is meant to be an interface for transferring the temperature data, and optionally further data, to another device. Especially, the machine interface is a bidirectional interface, which is configured for sending and receiving data. The machine interface can be selected from wired and/or wireless interfaces. Wireless interfaces can e.g. be selected from short-range wireless communication modules.

A data storage medium can be part of the temperature sensor and/or part of the electronics used to operate the temperature sensor. Especially, the data storage medium, if present, is included in the room unit. A data storage medium can be used to locally store the temperature data for evaluation at a later time and/or for use as a data backup, e.g. in case of disruptions of a machine interface.

Especially, the processed temperature data can be made available in step c) via more than one option simultaneously. For example the processed temperature data can be made available in step c) via a user interface and via a machine interface simultaneously, or via a user interface and on a data storage medium simultaneously, or via a machine interface and on a data storage medium simultaneously, or via the user interface and via a machine interface and on a data storage medium simultaneously.

In particular, the raw temperature data is acquired in the form of dataset comprising a plurality of raw temperature values in chronological order and/or comprising a plurality of data points each including a raw temperature value and an associated time stamp. Thereby, the dataset represents the temporal evolution of the raw temperature, which can be used for processing the raw temperature data in step b). In particular, this approach allows for considering historical raw temperature data in step b), which turned out to be highly beneficial.

In case the dataset comprises the plurality of raw temperature values in chronological order without any time stamp, the dataset might further comprise the time interval between the individual raw temperature data in order to obtain the temporal evolution of the raw temperature. However, if there is a fixed time interval, the time associated with an individual raw temperature data can be calculated directly.

In a further preferred implementation, a statistical parameter, especially the variance, of a set of several most recent temperature values from the raw temperature data is calculated and the correction algorithm is configured such that:

(i) in time periods in which the statistical parameter, especially the variance, of the set is equal to or above a predefined threshold, the acquired raw temperature data is at least partly compensated for a response time of the temperature sensor in step b); and

(ii) in other time periods, in which the statistical parameter, especially the variance, of the set is below the predefined threshold, the acquired raw temperature data in step b) is less compensated for a response time of the temperature sensor than under item (i), or the acquired raw temperature data in step b) is not compensated for a response time of the temperature sensor.

In another preferred implementation, a statistical parameter, especially the variance, of a set of several most recent temperature values from the raw temperature data is calculated and the correction algorithm is configured such that:

(i) in time periods in which the statistical parameter, especially the variance, of the set is below a predefined first threshold, the acquired raw temperature data in step b) is compensated for a response time of the temperature sensor according to a first compensation function or the acquired raw temperature data in step b) is not compensated for a response time of the temperature sensor;

(ii) in time periods in which the statistical parameter, especially the variance, of the set is equal to or higher than the predefined first threshold and lower than a predefined second threshold, the acquired raw temperature data is compensated for a response time of the temperature sensor in step b) according to a second compensation function; and

(iii) in time periods, in which the statistical parameter, especially the variance, of the set is equal to or above the predefined second threshold, the acquired raw temperature data is compensated for a response time of the temperature sensor in step b) according to a third compensation function.

Thereby, in particular, the first, second and third compensation functions are different.

The statistical parameter can e.g. be selected from an arithmetic mean, geometric mean, harmonic mean, the standard deviation and/or the variance of a set of several most recent temperature values from the raw temperature data. Thereby, the set of several most recent temperature values from the raw temperature data preferably comprises at least 5, in particular at least 10, especially at least 100, for example at least 1'000, individual raw temperature data.

Considering statistical parameters allows for discriminating between time periods with strong temperature changes and time periods with more constant temperatures. This makes it possible to optimize the response time compensation to the specific needs in a given time period. Overall, the response time compensation can be performed more efficiently with this approach.

As it turned out, the variance is a highly meaningful parameter in this context. The variance is the square of the standard deviation.

The threshold can be set according to specific requirements of the HVAC system.

In a further preferred implementation, the raw temperature data as acquired in step a) and/or the processed temperature data of step b) in addition are converted with a further correction algorithm that is configured for at least partly compensating a self-heating of the temperature sensor.

Thereby, preferably, a self-heating temperature is calculated and subtracted from the raw temperature data acquired in step a) and/or from the processed temperature data of step b).

In particular, the compensation of the self-heating is calculated taking into account at least one environmental parameter, especially at least two environmental parameters. The at least one environmental parameter preferably is selected from ambient temperature, supply voltage, humidity, and/or airflow.

Especially the at least one external parameter is selected from ambient temperature and/or supply voltage, most preferably the at least one external parameter comprises at least two external parameters, especially preferred the ambient temperature and the supply voltage.

For the ambient temperature, the most recent raw temperature or the most recent processed temperature can be used.

The supply voltage is meant to be a supply voltage of a device of the heating, ventilation, and/or air conditioning system, especially a device of the HVAC system comprising the temperature sensor. The device in particular is a room unit.

Especially, the supply voltage is estimated based on an internal voltage of a device of the heating, ventilation, and/or air conditioning system, especially the room unit. The internal voltage is meant to be the internal supply voltage at which the device of the HVAC system is operated.

The further correction algorithm in particular is configured such that the compensation is linearly dependent on the at least one environmental parameter, especially linearly dependent on at least two environmental parameters.

Especially, the further correction algorithm is configured such that the self-heating temperature $T_{SH}$ is calculated according to the following formula (I):

$$T_{SH}(y,z) = p_{00} + p_{10}y + p_{01}z \qquad \text{(I)}$$

whereby $p_{00}$, $p_{10}$, and $p_{01}$ are constant coefficients;
y is a first environmental parameter, especially the ambient temperature;
z is a second environmental parameter, especially the supply voltage;
and whereby the calculated self-heating temperature $T_{SH}$ is subtracted from the raw temperature data acquired in step a) and/or from the processed temperature data of step b).

The constant coefficients $p_{00}$, $p_{10}$, and $p_{01}$ in particular are determined experimentally.

Self-heating of the temperature sensor may taint the temperature measured by the temperature sensor, i.e. the measured temperature may differ from the ambient temperature. Using the further correction algorithm, the influence of self-heating on the measured temperature may be reduced.

In particular, at least one or all parameters of the further correction algorithm, especially the constant coefficients $p_{00}$, $p_{10}$, and/or $p_{01}$, are selected and/or set depending on the specific environment in which the temperature sensor is located, in particular depending on the type and/or configuration of the room unit in which the temperature sensor is placed.

This approach allows for a reliable and precise self-heating compensation.

Preferably, in time periods other than the selected time periods of step b) in which the acquired raw temperature data is processed with the correction algorithm, the processed temperature in step b) is set equal to the raw temperature data and/or to the raw temperature data processed with the further correction algorithm. Most preferably, the processed temperature in step b) is set equal to the raw temperature data processed with the further correction algorithm.

When implementing this feature, there is always temperature data that can be made available in step c) via the user interface, via the machine interface and/or on the data storage medium. Thus, for example, a central processing unit of the HVAC system can constantly be fed with temperature data.

Especially, steps a) and b) take place essentially simultaneously, preferably steps a), b) and c) take place essentially simultaneously.

In particular, the correction algorithm that is configured to at least partly compensate for a response time of the temperature sensor is a recursive filter. This is meant to be a filter which re-uses one or more of its outputs as an input. Surprisingly, recursive filters turned out to be highly beneficial for compensating for a response time of the temperature sensors as usually used in HVAC systems.

Especially, at least in the selected time periods, a latest value of the processed temperature data is calculated based on:

(i) the latest value of the time-resolved raw temperature data or the latest value of the time-resolved raw temperature data processed with the further correction algorithm, and based on

(ii) at least one previous temperature value of the processed temperature data and/or based on at least one previous temperature value of the time-resolved raw temperature data or at least one previous temperature value of the time-resolved raw temperature data processed with the further correction algorithm.

In particular, the latest value $u_c(n)$ of the processed temperature data is calculated based on the following formula (II):

$$u_c(n) = a_0 x(n) + a_1 x(n-1) + b_1 u_c(n-1) \qquad \text{(II)}$$

where

- $a_0$, $a_1$ and $b_1$ are recursion coefficients;
- $x(n)$ is the latest value of the time-resolved raw temperature data or the latest value of the time-resolved raw temperature data processed with the further correction algorithm;
- $x(n-1)$ is the previous value of the time-resolved raw temperature data or the previous value of the time-resolved raw temperature data processed with the further correction algorithm; and
- $u_c(n-1)$ is the previously calculated temperature value.

Especially, the recursion coefficients $a_0$, $a_1$ and $b_1$ are determined by (i) the temperature response time of temperature sensor in a given environment, (ii) a sampling rate of the temperature sensor and/or (iii) a desired accelerator factor of the response time of the temperature response time of temperature sensor.

Specifically, $a_0$, $a_1$ and $b_1$ in particular are defined according to the following formulas (III), (IV), and (V):

$$a_0 = \frac{2T + T_S}{2\alpha T + T_S} \qquad \text{(III)}$$

$$a_1 = \frac{2T - T_S}{2\alpha T + T_S} \qquad \text{(IV)}$$

$$b_1 = \frac{2\alpha T - T_S}{2\alpha T + T_S} \qquad \text{(V)}$$

whereby

- $T$ = temperature response time of temperature sensor in a given environment;
- $T_S$ = sampling rate of the temperature sensor;
- $\alpha$ = accelerator factor, whereby $0 < \alpha < 1$.

Typically, $T$, $T_S$ and $\alpha$ are chosen as follows: $T$ = 5 - 30 minutes, for example 12 - 20 minutes; $T_S$ = 0.5 - 30 seconds, for example 1 - 10 seconds; and $\alpha$ = 0.1 - 0.9, for example 0.4 - 0.7.

In particular, at least one or all parameters used in the correction algorithm, especially the recursion coefficients, the accelerator factor $\alpha$, the sampling rate $T_S$ and/or the temperature response time $T$, are selected and/or set depending on the specific environment in which the temperature sensor is located.

For example, at least one or all parameters used in the correction algorithm are selected and/or set depending on the room size, the position of the sensor in the room, the room occupancy and/or the type and/or configuration of the room unit in which the temperature sensor is placed. This allows for obtaining a correction of the temperature, which is adapted to the respective situation and/or to the preferences of a user.

However, in another possible implementation, at least one or all parameters used in the correction algorithm are set independently of the specific environment in which the temperature sensor is located.

The at least one or all parameters in particular are determined experimentally and/or set manually. Especially, the parameters are changed if the specific environment in which the temperature sensor is located changes and/or if a user a desires so.

For example, manually setting at least one or all of the parameters, e.g. the acceleration factor $\alpha$, allows for adjusting the correction algorithm to specific preferences of a user and/or to a given situation.

The acceleration factor $\alpha$ may optionally be determined as output of a function having as input a statistical parameter of a set of several most recent temperature values from the raw temperature data. More specifically, the acceleration factor $\alpha$ may be determined as output of a function having as input the variance of the set of the several most recent temperature values.

More specifically, the function for determining the acceleration factor $\alpha$ may comprise thresholds, e.g., two thresholds, and the function may comprise instructions for comparing the variance with the thresholds. The thresholds may be pre-set or changed dynamically, e.g., to adjust to changing environmental conditions. The thresholds may subdivide the real line into distinct compartments, and depending on in which compartment the variance falls, the acceleration factor $\alpha$ may be set to a different value.

For example, in case of two thresholds, in case the variance is smaller than the smaller threshold, e.g., equal to '0.002', of the two thresholds, the acceleration factor $\alpha$ may be set to a first constant value, e.g., '1', and in case the variance is larger than the larger threshold, e.g., equal to '0.25', of the two thresholds, the acceleration factor $\alpha$ may be set to a second constant value, e.g., '0.31', and in the remaining case the acceleration factor $\alpha$ may be determined as $\alpha = C_1 e^{-C_2 V} + C_3 e^{-C_4 V}$, with $C_1$ a constant, e.g., equal to '0.31', $C_2$ a constant, e.g., equal to '90', $C_3$ a constant, e.g., equal to '0.66', $C_4$ a constant, e.g., equal to '3', and V corresponding to the variance provided to the function as input.

The acceleration factor $\alpha$ may be determined automatically. Specifically, a sequence of acceleration factors $\alpha$ may be determined based on a sequence of equal length comprising variances, wherein each sequence element may be determined as just described using the corresponding variance in the sequence of variances.

For example, a device of a heating, ventilation, and/or air conditioning system, e.g. a room unit, comprising means adapted to execute the inventive method may be configured such that at least one or all parameters used in the correction algorithm, especially the recursion coefficients, the accelerator factor $\alpha$, the sampling rate $T_S$ and/or the temperature response time T, can be automatically and/or manually selected and/or set depending on the specific environment in which the temperature sensor is located.

The at least one or all parameters can e.g. be set directly on the device of a heating, ventilation, and/or air conditioning system, e.g. on a room unit, e.g. via a user interface, such as for example a control panel, touch sensitive displays, switches, buttons and/or rotary knobs.

In addition or alternatively, the at least one or all parameters can e.g. be set via a machine interface and/or connection means of a device of a heating, ventilation, and/or air conditioning system, e.g. a room unit.

For example, if the machine interface comprises a wireless communication module, e.g. a Wi-Fi module, an near field communication module (NFC), a Bluetooth module, a Bluetooth low energy module (BLE), and/or an ultra-wide band module (UWB), the parameters can be set with an external device, e.g. a mobile device such as a mobile phone.

In another example, if the machine interface comprises a wired communication interface and/or connection means to connect the device to the HVAC system, such as e.g. for a Multi Point Bus (MP-Bus), a Modbus, a Building Automation and Control Network (BACnet), and/or a KNX system, the parameters can be set with an external control unit via the wired interface and/or connection means.

According to another preferred implementation, the correction algorithm is implemented with an artificial neural network.

A second aspect of the first solution is directed to a device of a heating, ventilation, and/or air conditioning system comprising means adapted to execute the steps of the method of as described above. Thereby, the means in particular are adapted to execute the method with one or more, especially all, of the optional features as described above.

The "means adapted to execute the steps of the method of as described above" comprise (i) a temperature sensor, (ii) a controller which is configured for executing the steps of the method of as described above, and (iii) a user interface, a machine interface and/or a data storage medium for making available the processed temperature data. Thereby, the controller in particular comprises a program with instructions to cause the device to execute the steps of the above-described method.

For example, the device of a heating, ventilation, and/or air conditioning system, e.g. a room unit, is configured such that at least one or all parameters used in the correction algorithm, especially the recursion coefficients, the accelerator factor $\alpha$, the sampling rate $T_S$ and/or the temperature response time T, can be automatically and/or manually selected and/or set depending on the specific environment in which the temperature sensor is located.

In particular, if the controller is configure to perform the above-described further correction algorithm, the device is configured such that at least one or all parameters of the further correction algorithm, especially the constant coefficients $p_{00}$, $p_{10}$, and/or $p_{01}$, can be automatically and/or manually selected and/or set depending on the specific environment in which the temperature sensor is located, in particular depending on the type and/or configuration of the room unit in which the temperature sensor is placed.

Especially, the device is a room unit for an HVAC system. Preferably, the room unit comprises:

a) a housing, whereby the housing preferably comprises a mounting plate, for mounting the room unit on a wall of a building;

b) a connection means to connect the device to the HVAC system;

c) at least one temperature sensor to measure the temperature of ambient air.

As understood in the present application, a room unit is a device which is placed in a room, a space or a zone of a building having an HVAC system in order to supply data to the HVAC system, in particular to rely values set by a user on the room unit to the HVAC system and/or to rely current air parameters measured in a room, space or zone to the HVAC system. For example, the HVAC system then changes its operating parameters such as to match the set values for the particular room, space or zone. Thus, in the present context, the term "room unit" is to be interpreted broadly and encompasses room control units as well as room sensors.

Especially, the controller is arranged on a printed circuit board. Typical printed circuit boards are robust and can be fixed in the housing in a space saving manner.

Furthermore, the room unit, besides the temperature sensor, preferably comprises at least another sensor to measure at least one further parameter of ambient air, especially humidity, a concentration of $CO_2$, volatile organic compounds (VOC) and/or particulate matter.

More preferably, the room unit comprises:

a) the controller arranged on a first printed circuit board;

b) and the at least one temperature sensor to measure the temperature of ambient air, whereby the at least one temperature sensor is arranged on a frontside of a second printed circuit board; wherein the second printed circuit board protrudes from the first printed circuit board, especially in a direction perpendicular to the first printed circuit board;

whereby the second printed circuit board is arranged such that a backside of the second printed circuit board in physical contact with an inner surface of the housing.

The combination of the at least one temperature sensor arranged on a frontside of a second printed circuit board, which protrudes from the first printed circuit board and which is in physical contact via its backside with the inner surface of the housing turned out to be highly beneficial. With this setup the temperature sensor is thermally decoupled from the heat generating elements, e.g. microprocessors or other electronic components, which are part of the controller of the room unit. At the same time, the temperature of the housing of the room unit, which essentially corresponds to the temperature of the ambient air in the controlled room, space or zone is efficiently coupled to the second printed circuit board or the temperature sensor, respectively. In combination with the inventive method as described above, this allows to obtain even faster response times upon temperatures changes in the controlled room, space or zone.

Moreover, this setup allows to accurately measure the ambient room temperature essentially independently of the heat evolution of the controller on the first printed circuit board.

Furthermore, this arrangement is obtainable with established standard assembly methods for printed circuit boards. Put differently, there is no need for complex manufacturing processes or even manual labor. Hence, this arrangement can be produced in a highly efficient and cost effective manner.

Especially, the second printed circuit board is fixed, especially soldered and/or plugged, on the first printed circuit board, in particular with at least one or more pin connectors. Preferably, there are at least two, three, or more pin connectors. Pin connectors preferably are electrical connectors. This allows for a compact and mechanically stable connection between the two circuit boards. However, other setups are possible as well.

According to a preferred embodiment, the backside of the second printed circuit board comprises a heat conductive coating, which is in contact with the inner surface of the housing. In this case, the heat conductive coating of the second printed circuit board acts as a thermal bridge between the second printed circuit board and the housing. This greatly enhances the thermal coupling between the housing and the second printed circuit board or the temperature sensor, respectively, which in turn improves response times upon temperatures changes in the controlled room, space or zone.

However, depending on the specific application, the coating can be omitted in order to simplify the setup.

Preferably, the heat conductive material is a material with a thermal conductivity ($\lambda$) of at least 10 W/(m·K), preferably at least 100 W/(m·K), in particular at least 200 W/(m·K), whereby the thermal conductivity is measured at 0°C, at a pressure of 1.013 bar and a humidity of 50%.

Especially, the heat conductive material is a metallic material, in particular comprising or consisting of copper, aluminum, silver and/or gold. These materials feature a relatively high thermal conductivity while being mechanically and chemically stable for use as a coating in the room unit. Nevertheless, other materials can be suitable as well.

If present, the coating of the heat conductive material preferably covers at least 50%, especially at least 75%, in particular at least 90%, of the backside area of the second printed circuit board.

Preferably, a thickness of the coating of the heat conductive material is 0.001 - 1 mm, especially 0.01 - 0.5 mm, in particular 0.02 - 0.05 mm.

This results in a highly effective coupling between housing and second printed circuit board. However, the area share of the heat conductive coating can be below 50% and/or the thickness can be chosen differently, if desired for specific embodiments.

According to a further preferred embodiment, at least one humidity sensor to measure the humidity of ambient air is additionally arranged on the second printed circuit board. Also for these kind of sensors, reliable temperature conditions are important. Of course, the second printed circuit board might comprise further sensors.

In particular, a combined sensor for measuring temperature and humidity of ambient air is arranged on the second printed circuit board. This results in a space-saving structure and an easier readout of the sensors.

Especially, the at least one temperature sensor, the at least one humidity sensor and/or the combined sensor is an active sensor. In the present context, an active senor is meant to be a sensor device that is powered with input energy from a source other than that which is being sensed for delivering an output signal. In contrast, a passive sensor works without input energy. If desired, the invention can be implemented with passive sensors as well.

In a further preferred embodiment, a further sensor for measuring a further parameter of ambient air is arranged on the first printed circuit board, especially the further sensor is a sensor for measuring a concentration of $CO_2$, volatile organic compounds (VOC) and/or particulate matter. These kind of sensors, typically produce a considerable amount of heat during operation. Therefore, it is beneficial to arrange them on the first printed circuit board, i.e. thermally decoupled from the second printed circuit board comprising the temperature sensor.

However, a further sensor for measuring a further parameter of ambient air arranged on the first printed circuit board sensors is optional.

Preferably, the second printed circuit board is located at an edge of the first printed circuit board. This allows for a direct contacting of the second printed circuit board and the inner surface of the housing by placing the first printed circuit board nearby the inner surface. Additionally, the second printed circuit board can be separated as far as possible from the heat generating components on the first printed circuit board. However, other setups are possible as well. For example, the second printed circuit board can be located on a more central section of the first printed circuit board. In this case, the housing might feature an inner bulge for contacting the second printed circuit board.

Preferably, with respect to an installed state of the room unit,

- the controller is spaced in horizontal direction from the second printed circuit board, whereby, preferably, in horizontal direction the controller is located in the other half of the first printed circuit board than the second printed circuit board; and/or

- the controller is spaced in vertical direction from the second printed circuit board, whereby, preferably, the controller is located above the second printed circuit board; and/or

- the second printed circuit board is located in a lower half of the first printed circuit board; and/or

- if present, the further sensor for measuring a further parameter of ambient air, with respect to an installed state of the room unit, is arranged in a section of the first printed circuit board in vertical direction above the second printed circuit board.

With these measures, the second printed circuit board can optimally be separated from heat generating components on the first printed circuit board. Thereby, if the second printed circuit board is located in vertical direction below the heat generating components, ascending heat produced by these components will not flow around the second printed circuit board. Nevertheless, other setups are possible as well.

Especially, in a first section of the first printed circuit board, in which the second printed circuit board is installed,

- there is no metallic ground plane on or within the first printed circuit board; and/or

- a surface area of metallic connection lines and/or metallic ground planes on or within the first printed circuit board is below 50%, especially below 25%, in particular below 10%, with respect to the total surface area of the first section; and/or

- the first section is separated from a second section of the first printed circuit board, in which the controller is located, by at least one slit-shaped opening in the first printed circuit board, especially for thermally decoupling the two sections.

In a further preferred embodiment, the first printed circuit board comprises a third section in which the at least one further sensor is located, whereby, the third section is separated from the first and/or the second section by at least one further slit-shaped opening in the first printed circuit board, especially for thermally decoupling the third section from the first and/or the second section.

In the embodiments described above, the first section preferably has a surface share of 5 - 50%, especially 7 - 30%, in particular 10 - 20%, with respect to the total surface area of the first printed circuit board.

These measures, each one alone and even more in combination with each other, help to further thermally decouple the second printed circuit board from the first printed circuit board.

Especially, the housing frame comprises a support structure, especially a tray, for carrying the controller or the printed circuit board, especially the first printed circuit board, with the controller arranged on it within an inner volume surrounded by the side wall, especially on a side of the support structure facing away from the wall and/or the mounting plate.

The support structure preferably defines a fixed position of the circuit boards in the housing. If the support structure is present in the above-mentioned housing frame, the first printed circuit board with the second printed circuit board can be installed beforehand on the support structure and later on attached to the mounting plate. This greatly simplifies installation and maintenance.

Especially, the support structure covers 50 -100%, especially 70 - 90%, of the cross-sectional area of the inner volume surrounded by the side wall of the housing frame. This allows for dividing the housing into two distinct volumes, such that, for example, the circuit boards can be protected against undesired forces during installation.

The printed circuit board, especially the first printed circuit board, preferably comprises one or more pin connectors, in particular for connecting the controller to the connection means.

In this case, preferably, the mounting plate comprises the connection means to connect the device to the HVAC system, especially a connector for a bus system, especially a field bus system, and/or a socket which is configured for receiving the one or more pin connectors of the printed circuit board, especially the first printed circuit board.

Most preferably, the pin connectors of the printed circuit board, especially the first printed circuit board, and the connection means are configured such that the one or more pin connectors can be inserted or are inserted into the socket, especially through openings in the support structure, especially in a direction perpendicular to the mounting plate.

This allows for an easy and safe installation since the printed circuit board, especially the first printed circuit board, can simply be pressed on the connection means for establishing a connection.

The front housing part preferably is a separate part of the housing which is configured to be fixed on the housing frame, especially with at least one snap-in connector.

According to a preferred embodiment, the front housing part comprises a display, preferably an electronic paper display, especially covered with a transparent cover. This allows to display information about the set values and the measured parameters, such as the corrected temperature data.

In particular, the display is a touch-screen or is overlaid by a touch sensitive foil. Such a display can be used as an input device to set values, such as e.g. a desired room temperature, ventilation intensity, etc., by users.

In another preferred embodiment, the front housing part is a blind cover. In this case, no display is present and the room unit is intended to function without user input or user input is provided via other input devices, e.g. wireless communication modules.

Furthermore, the room unit preferably comprises a short-range wireless communication module which allows wireless communication with a mobile device for the exchange of data between the mobile device and the room unit, and vice versa.

Further preferred, the room unit comprises an antenna for wireless communication, especially, an antenna of the above mentioned short-range wireless communication module.

Most preferably, the antenna is arranged behind the display, especially in physical contact with the backside of the display. In particular the antenna can be in loose contact with the display or the antenna is attached to a backside of the display. In a special embodiment, the antenna is materially bonded to the backside of the display, especially adhesively bonded to the backside of the display.

Arranging the antenna behind the display turned out to be highly beneficial. Thereby the antenna can be attached to the backside of the display. This simplifies installation and protects the antenna during installation and maintenance. Nevertheless, electromagnetic waves typically used for short-range wireless frequencies sufficiently penetrate displays as they usually are used for room units. Additionally, the antenna is optimally placed in the room unit for establishing a reliable connection with a mobile device. As it turned out, users intuitively tend to hold a mobile device in front of a display. Thus, if the antenna is located behind the display, the chances to obtain a reliable connection in a first attempt are highly improved. The arrangement of the antenna behind the display therefore results in a synergistic effect.

If the front housing part is a blind cover, the antenna preferably is in physical contact or attached to the backside or the inner side, respectively, of the blind cover.

Preferably the antenna is a planar antenna, especially a microstrip antenna and/or a foil antenna, in particular comprising conductive antenna elements in and/or on a substrate in the form of a plastic foil. Such antennas are rather robust and compact.

Especially, the outer dimensions of the antenna are equal to or smaller than the size of the display. Thus, in this case the antenna is fully covered by the blind cover or the display, resulting in maximum protection.

According to a further preferred embodiment, the antenna is a planar frame-shaped antenna, especially with a shape and an outer dimension equal to the outer dimension of the display or the inner dimension of the blind cover. Antennas with such shapes can cover the whole area of the front housing part and/or the display and ensure a good connection with a mobile device even if it is positioned at an edge of the housing and/or display.

In another embodiment, the antenna can have the form of a planar rectangular sheet.

Further preferred, the front housing part comprises a frame element for carrying the display, the transparent cover, the touch sensitive foil, and/or the antenna, whereby, preferably, the frame element comprises snap-in connection means for connection the frame element to the housing frame. Such a frame element supports and protects the stack of components.

Especially, the controller comprises a microcontroller or microprocessor as well as at least one memory. In installed state, the controller is in particular electrically connected to the connection means, especially via the pin connectors. If present, the controller furthermore can be connected to the display, the second printed circuit board, the at least one temperature sensor and/or the at least one further sensors.

In particular, the controller is furthermore configured to send data to and receive data from the HVAC system. Additionally, the controller can be configured for presenting data on the display, if present, and/or reading data from an input device, if present. The data comprises for example temperature data, humidity data, $CO_2$ data, data on particulate matter and/or ventilation data.

In another preferred embodiment, the device is a device for determining the temperature of a fluid line, a duct, a valve, a fluid reservoir, a heating unit and/or a cooling unit of a HVAC system.

Thereby, in particular, the temperature sensor is fixed on and/or inside a fluid line, a duct, a valve, a fluid reservoir, a heating unit and/or a cooling unit of a HVAC system. The fluid line and/or the duct for example are configured for conducting a gaseous and/or a liquid medium. Likewise, the valve and/or the fluid reservoir preferably is a valve or a reservoir, respectively, for a gaseous and/or a liquid medium.

Thereby, for example, the controller and/or the user interface, the machine interface and/or a the data storage medium is/are spaced apart from the temperature sensor. In Particular, the temperature sensor is connected to the controller via an electrical cable. This allows the other components to be kept under more constant conditions.

Especially, the temperature sensor is clamped onto a fluid line, a duct, a valve, a fluid reservoir, a heating unit and/or a cooling unit of a HVAC system. This allows for an easy but reliable installation.

A third aspect of the first solution is directed to a computer program comprising instructions to cause the controller of the device, especially the room unit, as described above, to execute the steps of the method as described above.

A second solution of the invention is described in the following. The second solution, which can be implemented independently of the above-described first solution, is related to a method for determining a temperature in a heating, ventilation, and/or air conditioning system, comprising the steps of:

a) repeatedly measuring the temperature with a temperature sensor to acquire time-resolved raw temperature data;

b) processing the acquired raw temperature data with a correction algorithm that is configured for at least partly compensating a self-heating of the temperature sensor, at least in selected time periods to provide processed temperature data;

c) making available the processed temperature data via a user interface, via a machine interface and/or on a data storage medium.

Advantages described above in connection with the features of the first solution are likewise given with regard to corresponding features of the second solution.

The correction algorithm of the second solution that is configured for at least partly compensating a self-heating of the temperature sensor is essentially identical in design with the above-described further correction algorithm described above in connection with the first solution. However, in case of the second solution, there is not necessarily another correction algorithm, which is configured to at least partly compensate for a response time of the temperature sensor at least in selected time periods. However, such a correction algorithm or any other correction algorithm may optionally be present, if desired.

Preferably, a self-heating temperature is calculated and subtracted from the raw temperature data acquired in step a).

In particular, the compensation of the self-heating is calculated taking into account at least one environmental parameter, especially at least two environmental parameters. The at least one environmental parameter preferably is selected from ambient temperature, supply voltage, humidity, and/or airflow.

Especially the at least one external parameter is selected from ambient temperature and/or supply voltage, most preferably the at least one external parameter comprises at least two external parameters, especially preferred the ambient temperature and the supply voltage.

For the ambient temperature, the most recent raw temperature or the most recent processed temperature can be used.

The supply voltage is meant to be a supply voltage of a device of the heating, ventilation, and/or air conditioning system, especially a device of the HVAC system comprising the temperature sensor. The device in particular is a room unit.

Especially, the supply voltage is estimated based on an internal voltage of a device of the heating, ventilation, and/or air conditioning system, especially the room unit. The internal voltage is meant to be the internal supply voltage at which the device of the HVAC system is operated.

The correction algorithm of the second solution that is configured for at least partly compensating a self-heating of the temperature sensor in particular is configured such that the compensation is linearly dependent on the at least one environmental parameter, especially linearly dependent on at least two environmental parameters.

Especially, the correction algorithm is configured such that the self-heating temperature $T_{SH}$ is calculated according to the following formula (I):

$$T_{SH}(y,z) = p_{00} + p_{10}y + p_{01}z \qquad\qquad \text{(I)}$$

whereby $p_{00}$, $p_{10}$, and $p_{01}$ are constant coefficients;
y is a first environmental parameter, especially the ambient temperature;
z is a second environmental parameter, especially the supply voltage;
and whereby the calculated self-heating temperature $T_{SH}$ is subtracted from the raw temperature data acquired in step a) and/or from the processed temperature data of step b).

This approach allows for a reliable and precise self-heating compensation.

In particular, at least one or all parameters of the correction algorithm, especially the constant coefficients $p_{00}$, $p_{10}$, and/or $p_{01}$, are selected and/or set depending on the specific environment in which the temperature sensor is located, in particular depending on the type and/or configuration of the room unit in which the temperature sensor is placed.

A second aspect of the second solution is directed to a device of a heating, ventilation, and/or air conditioning system comprising means adapted to execute the steps of the method of as described above. Thereby, the means in particular are adapted to execute the method with one or more, especially all, of the optional features as described above.

The "means adapted to execute the steps of the method of as described above" comprise (i) a temperature sensor, (ii) a controller which is configured for executing the steps of the method of as described above, and (iii) a user interface, a machine interface and/or a data storage medium for making available the processed temperature data. Thereby, the controller in particular comprises a program with instructions to cause the device to execute the steps of the above-described method.

Especially, the device is a room unit for an HVAC system. Preferably, the room unit comprises:

a) a housing, whereby the housing preferably comprises a mounting plate, for mounting the room unit on a wall of a building;

b) a connection means to connect the device to the HVAC system;

c) at least one temperature sensor to measure the temperature of ambient air.

Especially, the controller is arranged on a printed circuit board. Typical printed circuit boards are robust and can be fixed in the housing in a space saving manner.

Furthermore, the room unit, besides the temperature sensor, preferably comprises at least another sensor to measure at least one further parameter of ambient air, especially humidity, a concentration of $CO_2$, volatile organic compounds (VOC) and/or particulate matter.

More preferably, the room unit comprises:

c) the controller arranged on a first printed circuit board;
d) and the at least one temperature sensor to measure the temperature of ambient air, whereby the at least one temperature sensor is arranged on a frontside of a second printed circuit board; wherein the second printed circuit board protrudes from the first printed circuit board, especially in a direction perpendicular to the first printed circuit board;

whereby the second printed circuit board is arranged such that a backside of the second printed circuit board in physical contact with an inner surface of the housing.

The combination of the at least one temperature sensor arranged on a frontside of a second printed circuit board, which protrudes from the first printed circuit board and which is in physical contact via its backside with the inner surface of the housing turned out to be highly beneficial. With this setup the temperature sensor is thermally decoupled from the heat generating elements, e.g. microprocessors or other electronic components, which are part of the controller of the room unit. At the same time, the temperature of the housing of the room unit, which essentially corresponds to the temperature of the ambient air in the controlled room, space or zone is efficiently coupled to the second printed circuit board or the temperature sensor, respectively. In combination with the inventive method as described above, this allows to obtain even faster response times upon temperatures changes in the controlled room, space or zone.

Moreover, this setup allows to accurately measure the ambient room temperature essentially independently of the heat evolution of the controller on the first printed circuit board.

Furthermore, this arrangement is obtainable with established standard assembly methods for printed circuit boards. Put differently, there is no need for complex manufacturing processes or even manual labor. Hence, this arrangement can be produced in a highly efficient and cost effective manner.

Especially, the second printed circuit board is fixed, especially soldered and/or plugged, on the first printed circuit board, in particular with at least one or more pin connectors. Preferably, there are at least two, three, or more pin connectors. Pin connectors preferably are electrical connectors. This allows for a compact and mechanically stable connection between the two circuit boards. However, other setups are possible as well.

According to a preferred embodiment, the backside of the second printed circuit board comprises a heat conductive coating, which is in contact with the inner surface of the housing. In this case, the heat conductive coating of the second printed circuit board acts as a thermal bridge between the second printed circuit board and the housing. This greatly enhances the thermal coupling between the housing and the second printed circuit board or the temperature sensor, respectively, which in turn improves response times upon temperatures changes in the controlled room, space or zone.

However, depending on the specific application, the coating can be omitted in order to simplify the setup.

Preferably, the heat conductive material is a material with a thermal conductivity ($\lambda$) of at least 10 W/(m·K), preferably at least 100 W/(m·K), in particular at least 200 W/(m·K), whereby the thermal conductivity is measured at 0°C, at a pressure of 1.013 bar and a humidity of 50%.

Especially, the heat conductive material is a metallic material, in particular comprising or consisting of copper, aluminum, silver and/or gold. These materials feature a relatively high thermal conductivity while being mechanically and chemically stable for use as a coating in the room unit. Nevertheless, other materials can be suitable as well.

If present, the coating of the heat conductive material preferably covers at least 50%, especially at least 75%, in particular at least 90%, of the backside area of the second printed circuit board.

Preferably, a thickness of the coating of the heat conductive material is 0.001 - 1 mm, especially 0.01 - 0.5 mm, in particular 0.02 - 0.05 mm.

This results in a highly effective coupling between housing and second printed circuit board. However, the area share of the heat conductive coating can be below 50% and/or the thickness can be chosen differently, if desired for specific embodiments.

According to a further preferred embodiment, at least one humidity sensor to measure the humidity of ambient air is additionally arranged on the second printed circuit board. Also for these kind of sensors, reliable temperature conditions are important. Of course, the second printed circuit board might comprise further sensors.

In particular, a combined sensor for measuring temperature and humidity of ambient air is arranged on the second printed circuit board. This results in a space-saving structure and an easier readout of the sensors.

Especially, the at least one temperature sensor, the at least one humidity sensor and/or the combined sensor is an active sensor. In the present context, an active senor is meant to be a sensor device that is powered with input energy from a source other than that which is being sensed for delivering an output signal. In contrast, a passive sensor works without input energy. If desired, the invention can be implemented with passive sensors as well.

In a further preferred embodiment, a further sensor for measuring a further parameter of ambient air is arranged on the first printed circuit board, especially the further sensor is a sensor for measuring a concentration of $CO_2$, volatile organic compounds (VOC) and/or particulate matter. These kind of sensors, typically produce a considerable amount of heat during operation. Therefore, it is beneficial to arrange them on the first printed circuit board, i.e. thermally decoupled from the second printed circuit board comprising the temperature sensor.

However, a further sensor for measuring a further parameter of ambient air arranged on the first printed circuit board sensors is optional.

Preferably, the second printed circuit board is located at an edge of the first printed circuit board. This allows for a direct contacting of the second printed circuit board and the inner surface of the housing by placing the first printed circuit board nearby the inner surface. Additionally, the second printed circuit board can be separated as far as possible from the heat generating components on the first printed circuit board. However, other setups are possible as well. For example, the second printed circuit board can be located on a more central section of the first printed circuit board. In this case, the housing might feature an inner bulge for contacting the second printed circuit board.

Preferably, with respect to an installed state of the room unit,

- the controller is spaced in horizontal direction from the second printed circuit board, whereby, preferably, in horizontal direction the controller is located in the other half of the first printed circuit board than the second printed circuit board; and/or

- the controller is spaced in vertical direction from the second printed circuit board, whereby, preferably, the controller is located above the second printed circuit board; and/or

- the second printed circuit board is located in a lower half of the first printed circuit board; and/or

- if present, the further sensor for measuring a further parameter of ambient air, with respect to an installed state of the room unit, is arranged in a section of the first printed circuit board in vertical direction above the second printed circuit board.

With these measures, the second printed circuit board can optimally be separated from heat generating components on the first printed circuit board. Thereby, if the second printed circuit board is located in vertical direction below the heat generating components, ascending heat produced by these components will not flow around the second printed circuit board. Nevertheless, other setups are possible as well.

Especially, in a first section of the first printed circuit board, in which the second printed circuit board is installed,

- there is no metallic ground plane on or within the first printed circuit board; and/or

- a surface area of metallic connection lines and/or metallic ground planes on or within the first printed circuit board is below 50%, especially below 25%, in particular below 10%, with respect to the total surface area of the first section; and/or

- the first section is separated from a second section of the first printed circuit board, in which the controller is located, by at least one slit-shaped opening in the first printed circuit board, especially for thermally decoupling the two sections.

In a further preferred embodiment, the first printed circuit board comprises a third section in which the at least one further sensor is located, whereby, the third section is separated from the first and/or the second section by at least one further slit-shaped opening in the first printed circuit board, especially for thermally decoupling the third section from the first and/or the second section.

In the embodiments described above, the first section preferably has a surface share of 5 - 50%, especially 7 - 30%, in particular 10 - 20%, with respect to the total surface area of the first printed circuit board.

These measures, each one alone and even more in combination with each other, help to further thermally decouple the second printed circuit board from the first printed circuit board.

Especially, the housing frame comprises a support structure, especially a tray, for carrying the controller or the printed circuit board, especially the first printed circuit board, with the controller arranged on it within an inner volume surrounded by the side wall, especially on a side of the support structure facing away from the wall and/or the mounting plate.

The support structure preferably defines a fixed position of the circuit boards in the housing. If the support structure is present in the above mentioned housing frame, the first printed circuit board with the second printed circuit board can be installed beforehand on the support structure and later on attached to the mounting plate. This greatly simplifies installation and maintenance.

Especially, the support structure covers 50 -100%, especially 70 - 90%, of the cross-sectional area of the inner volume surrounded by the side wall of the housing frame. This allows for dividing the housing into two distinct volumes, such that, for example, the circuit boards can be protected against undesired forces during installation.

The printed circuit board, especially the first printed circuit board, preferably comprises one or more pin connectors, in particular for connecting the controller to the connection means.

In this case, preferably, the mounting plate comprises the connection means to connect the device to the HVAC system, especially a connector for a bus system, especially a field bus system, and/or a socket which is configured for receiving the one or more pin connectors of the printed circuit board, especially the first printed circuit board.

Most preferably, the pin connectors of the printed circuit board, especially the first printed circuit board, and the connection means are configured such that the one or more pin connectors can be inserted or are inserted into the socket, especially through openings in the support structure, especially in a direction perpendicular to the mounting plate.

This allows for an easy and safe installation since the printed circuit board, especially the first printed circuit board, can simply be pressed on the connection means for establishing a connection.

The front housing part preferably is a separate part of the housing which is configured to be fixed on the housing frame, especially with at least one snap-in connector.

According to a preferred embodiment, the front housing part comprises a display, preferably an electronic paper display, especially covered with a transparent cover. This allows to display information about the set values and the measured parameters, such as the corrected temperature data.

In particular, the display is a touch-screen or is overlaid by a touch sensitive foil. Such a display can be used as an input device to set values, such as e.g. a desired room temperature, ventilation intensity, etc., by users.

In another preferred embodiment, the front housing part is a blind cover. In this case, no display is present and the room unit is intended to function without user input or user input is provided via other input devices, e.g. wireless communication modules.

Furthermore, the room unit preferably comprises a short-range wireless communication module which allows wireless communication with a mobile device for the exchange of data between the mobile device and the room unit, and vice versa.

Further preferred, the room unit comprises an antenna for wireless communication, especially, an antenna of the above mentioned short-range wireless communication module.

Most preferably, the antenna is arranged behind the display, especially in physical contact with the backside of the display. In particular the antenna can be in loose contact with the display or the antenna is attached to a backside of the display. In a special embodiment, the antenna is materially bonded to the backside of the display, especially adhesively bonded to the backside of the display.

Arranging the antenna behind the display turned out to be highly beneficial. Thereby the antenna can be attached to the backside of the display. This simplifies installation and protects the antenna during installation and maintenance. Nevertheless, electromagnetic waves typically used for short-range wireless frequencies sufficiently penetrate displays as they usually are used for room units. Additionally, the antenna is optimally placed in the room unit for establishing a reliable connection with a mobile device. As it turned out, users intuitively tend to hold a mobile device in front of a display. Thus, if the antenna is located behind the display, the chances to obtain a reliable connection in a first attempt are highly improved. The arrangement of the antenna behind the display therefore results in a synergistic effect.

If the front housing part is a blind cover, the antenna preferably is in physical contact or attached to the backside or the inner side, respectively, of the blind cover.

Preferably the antenna is a planar antenna, especially a microstrip antenna and/or a foil antenna, in particular comprising conductive antenna elements in and/or on a substrate in the form of a plastic foil. Such antennas are rather robust and compact.

Especially, the outer dimensions of the antenna are equal to or smaller than the size of the display. Thus, in this case the antenna is fully covered by the blind cover or the display, resulting in maximum protection.

According to a further preferred embodiment, the antenna is a planar frame-shaped antenna, especially with a shape and an outer dimension equal to the outer dimension of the display or the inner dimension of the blind cover. Antennas with such shapes can cover the whole area of the front housing part and/or the display and ensure a good connection with a mobile device even if it is positioned at an edge of the housing and/or display.

In another embodiment, the antenna can have the form of a planar rectangular sheet.

Further preferred, the front housing part comprises a frame element for carrying the display, the transparent cover, the touch sensitive foil, and/or the antenna, whereby, preferably, the frame element comprises snap-in connection means for connection the frame element to the housing frame. Such a frame element supports and protects the stack of components.

Especially, the controller comprises a microcontroller or microprocessor as well as at least one memory. In installed state, the controller is in particular electrically connected to the connection means, especially via the pin connectors. If present, the controller furthermore can be connected to the display, the second printed circuit board, the at least one sensor and/or the at least one further sensors.

In particular, the controller is furthermore configured to send data to and receive data from the HVAC system. Additionally, the controller can be configured for presenting data on the display, if present, and/or reading data from an input device, if present. The data comprises for example temperature data, humidity data, $CO_2$ data, data on particulate matter and/or ventilation data.

A third aspect of the second solution is directed to a computer program comprising instructions to cause the device, especially the rom unit, as described above, to execute the steps of the method as described above.

A fourth aspect of the second solution is directed to a computer-readable medium having stored thereon the computer program as described above.

Other advantageous embodiments and combinations of features come out from the detailed description below and the entirety of the claims.

**Brief description of drawings**

The drawings used to explain the embodiments show:

Fig. 1 An exploded perspective view of a housing frame, a printed circuit board, a frame element, a planar frame-shaped antenna for wireless communication and an electronic paper display with touch functionality, for use in a room unit;

Fig. 2 A perspective view of the part of the housing frame of Fig. 1;

Fig. 3 A mounting plate comprising a base plate with a circumferential rim projecting away perpendicularly from the base plate for use in room unit together with the components of Fig. 1;

Fig. 4 A top view onto the upper surface of the mounting plate of Fig. 3 with two first protrusions protruding away from the outer surface of the rim;

Fig. 5 An intermediate state during the connection of the housing frame of Fig. 1 and the mounting plate of Fig. 3;

Fig. 6 A detailed view of the interlocking between the housing frame and the mounting plate in the intermediate state shown in Fig. 5;

Fig. 7 A detailed view of the interlocking between the housing frame and the mounting plate after pivoting the housing frame into the closes state;

Fig. 8 The printed circuit board comprising a first printed circuit board and a second printed circuit board protruding from an edge of the first printed circuit board in a direction perpendicular to the first printed circuit board;

Fig. 9 Another view of the printed circuit board of Fig. 8;

Fig. 10 A top view on the printed circuit board of Fig. 8 and 9 installed in the housing frame of Fig. 1 from the side opposite the mounting plate (without frame element, antenna and display attached);

Fig. 11 A detailed view of the second printed circuit board from a face side;

Fig. 12 A perspective view of a room unit comprising the components as shown in Fig. 1 - 11 in assembled state;

Fig. 13 A further room unit comprises a blind cover as front housing part instead of a display;

Fig. 14 A schematic representation of a method for determining a temperature in a HVAC system whereby a correction algorithm that is configured to at least partly compensate for a response time of the temperature sensor is implemented;

Fig. 15 A comparison of the response time of a temperature sensor with partly compensated response time of the temperature sensor (solid line) and without compensation (dashed line);

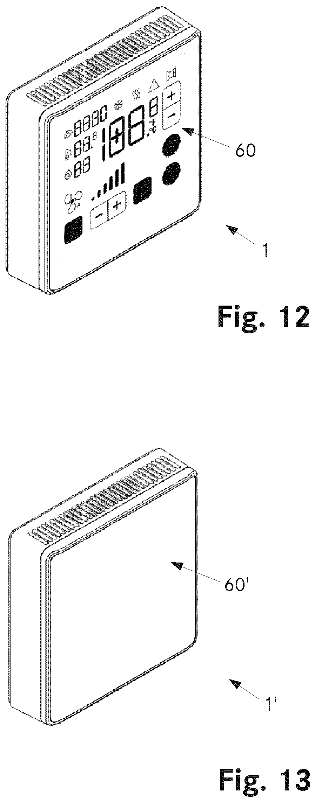

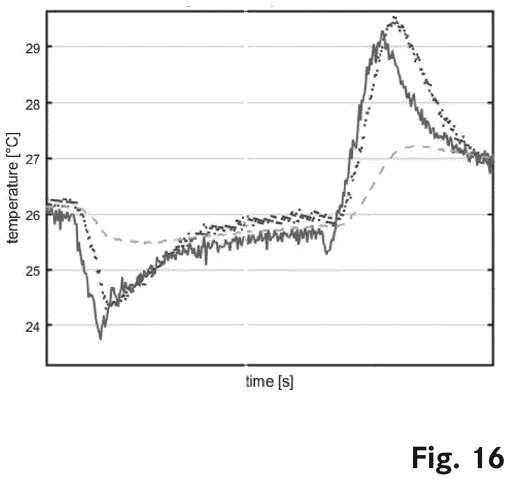

Fig. 16 A comparison of three temperature profiles measured with the room unit of Fig. 12 and an additional reference sensor. The solid line (--) represents the data as measured for comparison with the fast reference sensor having a very short response time. The dashed line (- - -) represents the raw data as measured with the room unit of Fig. 12, i.e. without processing with the correction algorithm. The dotted line (•••) represents the temperature data after being processed with the correction algorithm that is configured to at least partly compensate for a response time of the temperature sensor;

Fig. 17 A schematic representation of a method for determining a temperature in a HVAC system whereby a correction algorithm that is configured to at least partly compensating a self-heating of the temperature sensor is implemented;

Fig. 18      The dependence of the self-heating temperature ($T_{SH}$) on the temperature internal and the voltage of the room unit of Fig. 12;

Fig. 19      A schematic representation of a method for determining a temperature in a HVAC system whereby and correction algorithm for at least partly compensating for a response time of the temperature sensor and a further correction algorithm for least partly compensating a self-heating of the temperature sensor is implemented.

In the figures, the same components are given the same reference symbols.

## Exemplary embodiments

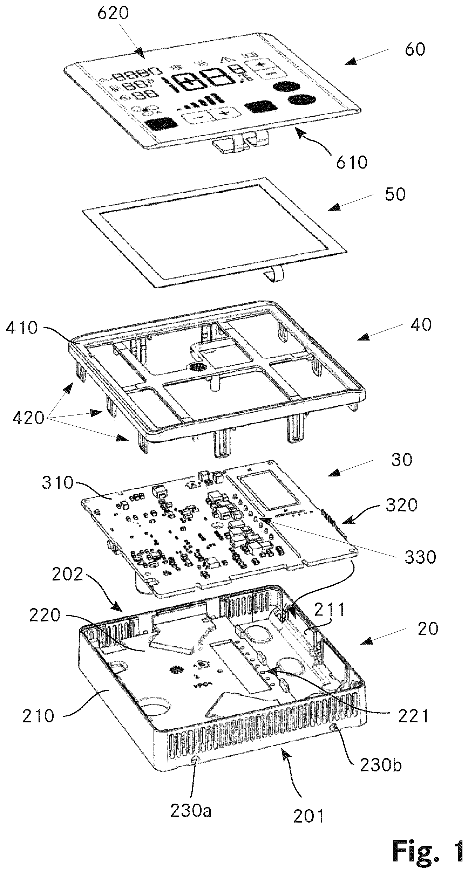

Fig. 1 shows an exploded view of a housing frame 20, a printed circuit board 30, a frame element 40, a planar frame-shaped microstrip antenna 50 for wireless communication and an electronic paper display 60 with touch functionality, which are components of a first room unit 1 as shown in Fig. 12.

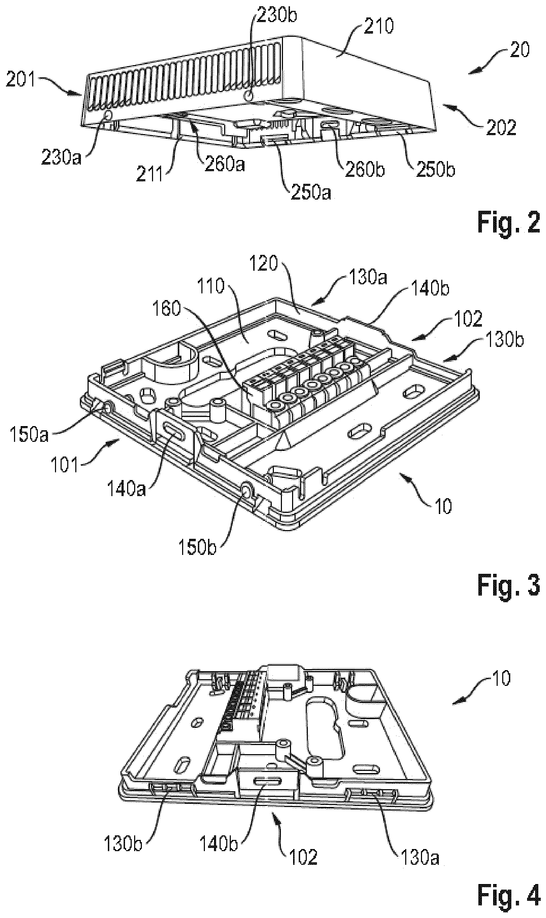

The housing frame 20 comprises a circumferential side wall 210 enclosing an inner volume of the housing frame 20. The side wall 210 comprises two bores 230a, 230b next to slit-shaped air vents at a bottom side 201 (in vertical direction with respect to the installed state) for fixing the housing frame 20 on a mounting plate 10 (see Fig. 2 - 4). The upper side 202 (in vertical with respect to the installed state) opposing the bottom side 201 comprises further slit-shaped air vents.

The inner volume of the housing frame 20 is divided into a lower part and an upper part with a tray-like support structure 220 with several breakthroughs for receiving the printed circuit board 30.

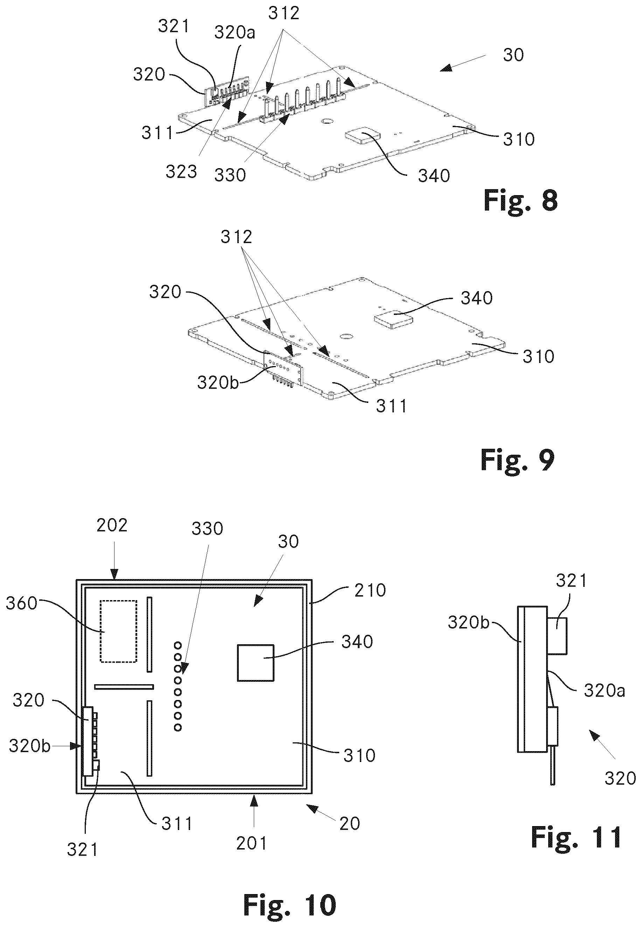

The printed circuit board 30 comprises a first printed circuit board 310 and a second printed circuit board 320 protruding from an edge of the first printed circuit board 310 in a direction perpendicular to the first printed circuit board 310. In a central part, there are 8 pin connectors 330 protruding in a direction towards the housing frame 20 (in Fig. 1 only the backside ends of the pin connectors are visible). Further details of the printed circuit board 30 and the arrangement in the housing frame 20 are given in Fig. 8 - 11.

As section of the inner surface 211 of the side wall 210 of the housing frame 20 is configured for contacting the second printed circuit board 320 in assembled state. In a central part of the support structure 220 there are 8 circular openings 221 for passing through the pin connectors 330 of the printed circuit board. Other breakthroughs present for accommodating bulky electronic components of the printed circuit board 30.

The frame element 40 comprises a circumferential edge 410 as well as several supporting ribs and is configured for receiving the planar frame-shaped microstrip antenna 50 and the touchscreen display 60. In assembled state, the antenna 50 is located at the backside 610 of the display 60 in physical contact with it. The outer dimensions of the antenna 50 are essentially identical to the out dimensions of the display 60. The stack consisting of the antenna 50 and the display 60 can be materially bonded to the frame 40. The frame 40 then can be attached to the housing frame 20 with ten snap-in connectors 420 that can engage with corresponding counterparts at the inner surface 211 of the side wall 210.

Frame element 40 and display 60 together form a front housing part.

Fig. 2 shows a view of housing frame 20 opposite the printed circuit board 30. At the inside of the upper side 202, the side wall 210 comprises two wedge-shaped protrusions, 250a, 250b projecting away from the inner surface of the side wall 210 towards an opposite inner surface of the housing frame 20.

Furthermore, there is a connection element 260b in the form of a recess between the two protrusions 250a, 250b, which is part of a mechanical snap-in connector for fixing the housing frame 20 to the mounting plate 10. At the side opposite of the protrusions 250a, 250b, there is a further connection element 260a, which is identical in design.

Fig. 3 shows a mounting plate 10 comprising a square base plate 110 with a circumferential rim 120 projecting away perpendicularly from the base plate 110, whereby the rim is offset inwards from a circumferential edge of the base plate 110 by approximately a thickness of the side wall 210 of the mounting frame 20. The side wall 210 is configured for receiving the rim 120 of the mounting plate 10 with positive fit.

At the bottom side 101 (in vertical with respect to the installed state) of the rim 120, there are two headless screws 150a, 150b arranged in a nut behind the rim 120, whereby in a first position as shown in Fig. 3, the screws 150a, 150b are fully located below an outer surface of the rim 120 of the mounting 10 plate. If the rim 120 of the mounting plate 10 is received in the housing frame 20 and the screws 150a, 150b are brought in a second position, in which the screws 150a, 150b protrude outside the outer surface of the rim 120 into the corresponding bores 230a, 230b, the housing frame 20 is additionally secured to the mounting plate 10 in assembled state.

Additionally, in a central part of the bottom side 101 of the rim 120 there is a connection element 140a in the form of a bulge, which is configured to engage with the connection element 260a of the housing frame 20. Thereby, connection elements 140a, 260a form a snap-in connector.

At the central part of the upper side 102 (in vertical direction with regard to the installed state) of the rim 120 there is a further connector element 140b, which is identical in design and configured to engage with the connection element 260b of the housing frame 20, thus forming another snap-in connector.

The sections of the side wall 210 comprising the connector elements 260a, 260b are configure as break-out section.

At the upper side 102 of the rim, which is opposed to the bottom side 101, there are two spaced wedge-shaped protrusions 130a, 130b (not visible in Fig. 3; cf. Fig. 4) projecting away from an outer surface of the rim 120 in a direction parallel to the base plate 110.

Within the context of the present invention, protrusions 130a, 130b are called first protrusions and protrusions, 250a, 250b are called second protrusions.

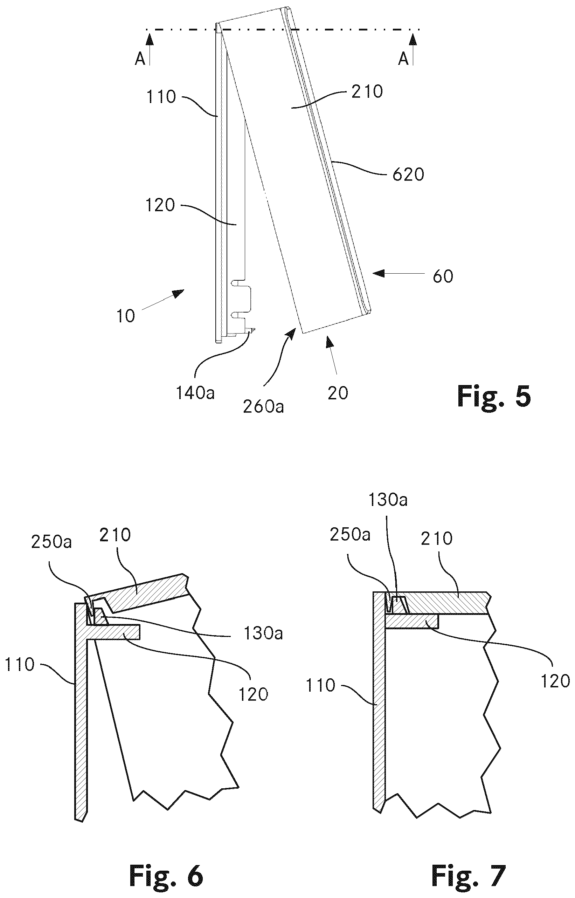

The first protrusions 130a, 130b of the base plate and the respective second protrusions 250a, 250b of the housing frame 20 are configured in such a way that they can interlock with each other with a positive fit when the rim 110 of the mounting plate 10 is at least partly received in the circumferential side wall 210 of the mounting frame 20 (see Fig. 5 - 7 for more details).

The sections of the rim 120 comprising the connector elements 140a, 140b are configured as break-out sections each with two predetermined breaking points.

Additionally, there is a socket 160 which is configured for receiving pin connectors 330 of the printed circuit board 30. They can be inserted into the socket 160 through the circular openings 221 in the support structure 220 in a direction perpendicular to the mounting plate 10.

Fig. 4 shows a top view onto the upper surface 102 of the mounting plate 10, showing the first protrusions 130a, 130b protruding away from an outer surface of the rim 120 in a direction parallel to the base plate 110, i.e. in Fig. 4 into the direction of the viewer.

Fig. 5 shows an intermediate state during the connection process of the housing frame 20 and the mounting plate 10. Thereby, the components 30, 40, 50 and 60 have been attached to the housing frame 20 and the mounting plate has been fixed on a wall of a building (not shown) beforehand. Specifically, the housing frame 20 is hooked with its protrusions 250a, 250b onto the protrusions 130a, 130b protruding in vertical direction from the upper side of the rim 120 of the mounting plate 10. Thereby, the housing frame stands off at an angle with respect to the base plate 110 at an angle of for example 25°.

Fig. 6 shows a detailed view of the interlocking between the first protrusion 130a and the second protrusion 130b in a cross-section of the upper left corner along line A-A of Fig. 5.

Thereafter, the housing frame 20 is pivoted around the interlocked protrusions 130a, 130b, 250a, 250b until the connection elements 140a, 260a, i.e. the snap-in connector, engage and, together with the interlocked connection elements 140a, 260a, secure the housing frame 20 to the mounting plate 10. The corresponding detailed view of this situation is shown in Fig. 7. Thereafter, the housing frame can be further secured with the screws 150a, 150b by bringing them in engagement with the bores 230a, 230b. In Fig. 12 a perspective view of the resulting room unit 1 in assembled state is shown.

In order to enable the pivoting motion, tolerances for the positive fit between the side wall 210 and the rim 120 of the mounting plate 10 are chosen accordingly. Furthermore the tolerances allow for pressing the housing frame in a direction perpendicular to the mounting plate 10, such that the protrusions 130a, 130b, 250a, 250b and the connection elements 140a, 260a can slip-over without prior hooking.

Fig. 8 and 9 show the printed circuit board 30 from different perspectives. As already mentioned, the printed circuit board 30 comprises the first printed circuit board 310 and the second printed circuit board 320 protruding from an edge of the first printed circuit board 310 in a direction perpendicular to the first printed circuit board 310. The second printed circuit board 320 is for example soldered to the first printed circuit board with pin connectors.

On the first printed circuit board 310, a controller 340 comprising a microprocessor and a memory is arranged, whereas on the front side 320a of the second printed circuit board 320, a combined sensor 321 for measuring temperature and humidity of ambient air is arranged.

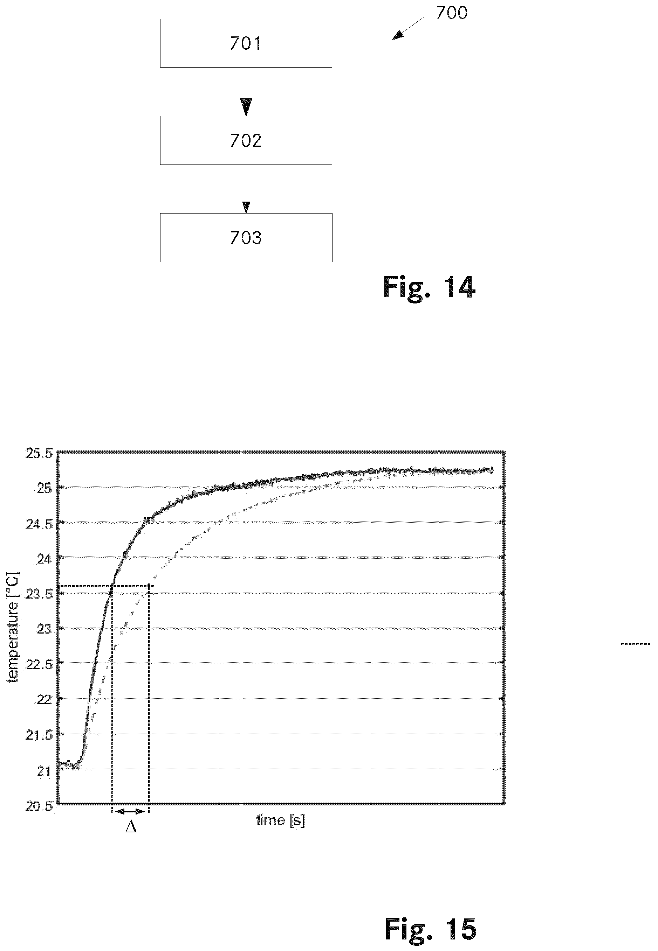

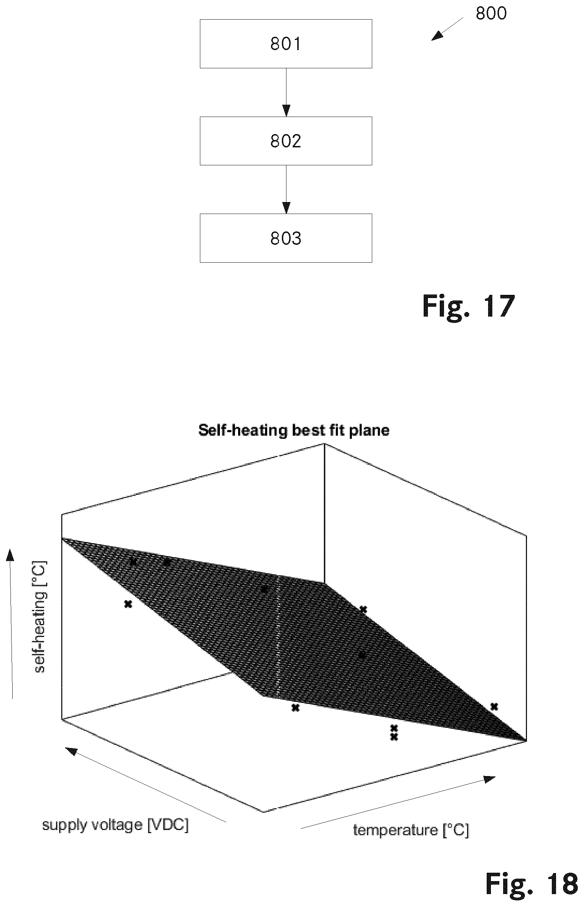

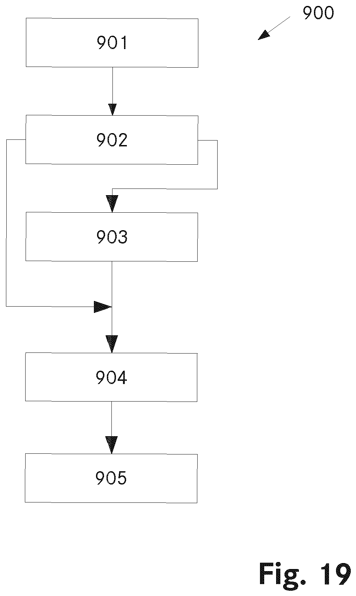

The controller 340 is configured for carrying out one or more methods or programs, respectively. For example a first method is method 700 described below in connection with Fig. 14 - 16. A second method is e.g. method 800 described below in connection with Fig. 17 - 18 and a third method is for example method 900 described below in connection with Fig. 19. Specifically, the controller 340 comprises appropriate programs to run these methods.

In a central part, there are 8 pin connectors 330 protruding in a direction perpendicular to the first printed circuit board 310.

A first section 311 of the first printed circuit board 310, in which the second printed circuit board is installed, is separated from the section comprising the controller 340 by slit-shaped openings 312 for thermally decoupling the two sections.

The backside 320b of the second printed circuit board 320 is coated with a copper coating having a thickness of

for example 35 μm essentially on the entire surface area.

Fig. 10 shows a top view on the printed circuit board 30 installed in the housing frame 20 from the side opposite the mounting plate (without frame element 40, antenna 50 and display 60 attached). In the lower left corner in Fig. 10, the backside 320b of the second printed circuit board 320 is in physical contact with the inner surface of the side wall 210 of the housing frame 20 in order to achieve a thermal coupling. If desired, a further sensor 360, e.g. a $CO_2$ sensor can be arrange in section 31 1, which preferably is isolated from the second printed circuit 320 and the controller by slit-shaped opening.

If the room unit is installed as intended with the bottom surface 201 of the housing pointing towards the floor and the upper surface 202 pointing towards the ceiling of the building, any ascending heat produced by the controller and the optional further sensor will not flow around the second printed circuit board.

Fig. 11 shows a detailed view of the second printed circuit board 320 from a face side.

Fig. 12 shows a perspective view of the room unit 1 comprising the components as shown in Fig. 1 - 11 in assembled state.

Fig. 13 shows a further room unit 1', which is essentially identical in design with room unit 1. However, instead a display 60, the room unit 1' comprises a blind cover 60'.

Fig. 14 shows a schematic representation of a method 700 for determining a temperature in a heating, ventilation, and/or air conditioning system. The method is for example performed with the above described room unit 1.

The method 700 comprises a step 701 of repeatedly measuring the temperature with a temperature sensor, e.g. combined sensor 321 as described above, to acquire time-resolved raw temperature data.

The raw temperature data acquired in step 701 then is processed in a next step 702 with a correction algorithm that is configured to at least partly compensate for a response time of the temperature sensor to provide processed temperature data. The correction algorithm is a recursive filter, which is implemented in line with the above described formula (II):

$$u_c(n) = a_0 x(n) + a_1 x(n-1) + b_1 u_c(n-1) \qquad \text{(II)}$$

where

- $u_c(n)$ is the latest value of the processed temperature data

- $a_0$, $a_1$ and $b_1$ are recursion coefficients;

- $x(n)$ is the latest value of the time-resolved raw temperature data;

- $x(n-1)$ is the previous value of the time-resolved raw temperature data; and

- $u_c(n-1)$ is the previously calculated temperature value.

Thereby, the recursion coefficients $a_0$, $a_1$ and $b_1$ were defined according to the following formulas (III), (IV), and (V):

$$a_0 = \frac{2T + T_S}{2\alpha T + T_S} \qquad \text{(III)}$$

$$a_1 = \frac{2T - T_S}{2\alpha T + T_S} \qquad \text{(IV)}$$

$$b_1 = \frac{2\alpha T - T_S}{2\alpha T + T_S} \qquad \text{(V)}$$

Thereby, the temperature response time T of the temperature sensor was determined experimentally with the sensor mounted in room unit 1. In the present example, T = 8 minutes. The sampling rate $T_S$ was set to 5 seconds. The acceleration factor $\alpha$ was set to 0.4.

In step 703, the processed temperature data is made available via a user interface, e.g. the electronic paper display 60 of room unit 1 and transmitted via socket 160 and electrical cables to a central unit of the HVAC system.

Method 700 represents an example of the first solution of the invention. It should be noted that the temperature response time T as used in the correction algorithm is dependent on the specific room unit. For example, if the temperature sensor is replaced by another sensor without $CO_2$ sensing unit, or if the display is replaced by a blind cover, or if a housing with a different structure is used, the temperature response time T needs to be determined for these configurations separately.

Fig. 15 shows the effect of the processing in step 702. Thereby, the lower curve shows the evolution of the temperature reading of the temperature sensor without correction upon a step-like increase of the ambient temperature from about 21°C to about 25°C. In Fig. 15, the time required for the sensor to indicate a temperature of 23.69°C (63.2% of the step-like increase of the ambient temperature) is for example about 8 minutes (= uncorrected response time T).

However, if processing the raw data with the correction algorithm as described above, the response time can be significantly reduced. Put differently, the time required for the sensor to indicate the temperature of 23.69°C (63.2% of the step-like increase of the ambient temperature) in this example is only about 4.8 minutes (= corrected response time). Thus, thanks to the inventive processing of the acquired raw temperature data with the correction algorithm more than 35% reduction (Δ) of response time can be achieved essentially without losing accuracy.

Fig. 16 shows three temperature profiles measured with the room unit 1 and an additional reference sensor. The solid line (--) represents the data as measured for comparison with a fast reference sensor having a very short response time. The dashed line (- - -) represents the raw data as measured with the room unit 1, i.e. without processing with the correction algorithm. The dotted line (...) represents the temperature data after being processed with the correction algorithm that is configured to at least partly compensate for a response time of the temperature sensor. As evident, the temperature curve obtained with the correction algorithm follows quite close the temperature curve obtained with the fast reference sensor. Thus, with the inventive method it is possible to at least partly compensate for a response time of the temperature sensor solely based on the raw measurement data.

Fig. 17 shows a schematic representation of a method 800 for determining a temperature in a heating, ventilation, and/or air conditioning system. The method is for example performed with the above described room unit 1.

The method 800 comprises a step 801 of repeatedly measuring the temperature with a temperature sensor, e.g. combined sensor 321 as described above, to acquire time-resolved raw temperature data.

The raw temperature data acquired in step 801 then is processed in a next step 802 with a correction algorithm that is configured to at least partly compensating a self-heating of the temperature sensor, at least in selected time periods to provide processed temperature data. Specifically, the correction algorithm is configured such that the self-heating temperature $T_{SH}$ is calculated according to the following formula (I):

$$T_{SH}(y,z) = p_{00} + p_{10}y + p_{01}z \qquad \text{(I)}$$

whereby $p_{00}$, $p_{10}$, and $p_{01}$ are constant coefficients, which have been determined experimentally for room unit 1 ($p_{00}$ = 0.2424, $p_{10}$ = -0.008125, $p_{01}$ = 0.01109);
y is a first environmental parameter, namely the ambient temperature;
z is a second environmental parameter, namely the internal voltage of the room unit 1;
and whereby the calculated self-heating temperature $T_{SH}$ is subtracted from the raw temperature data, respectively.

In step 803, the processed temperature data is made available via a user interface, e.g. the electronic paper display 60 of room unit 1 and transmitted via socket 160 and electrical cables to a central unit of the HVAC system.

Method 800 represents an example of the second solution of the invention, which can be implemented independently of the first solution, if desired.

It should be noted that self-heating is dependent on the specific room unit. For example, if the temperature sensor is replaced by another sensor without $CO_2$ sensing unit, or if the display is replaced by a blind cover, or if a housing with a different structure is used, the constant coefficients $p_{00}$, $p_{10}$, and $p_{01}$ need to be determined for these configurations separately.

Fig. 18 shows the dependence of the self-heating temperature ($T_{SH}$; axis values increase in direction of the arrow) on the internal supply voltage of the room unit (axis values increase in direction of the arrow) and the temperature considered in the above-mentioned formula (I) (y; axis values increase in direction of the arrow).

As evident, the higher the temperature, the lower the self-heating. In contrast, the higher the internal voltage, the higher the self-heating. Specifically, in a temperature window of about 50°C (= coverage of temperature axis), the self-heating temperature increases in the range of a few tenths of a degree when the supply voltage is increased by 10 - 15 volts.

Fig. 19 shows a schematic representation of a further method 900 for determining a temperature in a heating, ventilation, and/or air conditioning system. The method 900 is performed with the above described room unit 1.

Method 900 comprises a step 901 of repeatedly measuring the temperature with a temperature sensor, e.g. combined sensor 321 as described above, to acquire time-resolved raw temperature data.

In step 902, the variance (= statistical parameter) of a set of several most recent temperature values from the raw temperature data is calculated and compared with a predefined threshold. Thereby,

(i) in time periods in which the variance of the set is equal to or above a predefined threshold, the acquired raw temperature data is compensated for a response time of the temperature sensor in step 903. Step 903 is essentially identical to the above described step 702 of the method shown in Fig. 14. After processing the raw temperature data in step 903, the processed data is further processed in step 904.

(ii) in other time periods, in which the variance of the set is below the predefined threshold, the acquired raw temperature data is not processed in step 903, i.e. there is no compensation of the response time of the temperature sensor. In this case, step 903 is bypassed and the raw data is directly processed in step 904.

In step 904, the raw temperature data or the temperature data processed in step 903, respectively, is further processed with a further correction algorithm which is configured such that the self-heating temperature $T_{SH}$ is calculated similar to step 802 of method 800 described above and then the calculated self-heating temperature $T_{SH}$ is subtracted from the raw temperature data or the temperature data processed in step 903, respectively.

In step 905, the processed temperature data is made available via a user interface, e.g. the electronic paper display 60 of room unit 1 and/or transmitted via socket 160 and electrical cables to a central unit of the HVAC system.

Thus, method 900 works similarly to method 700 and represents another example of the first solution of the invention. However, in method 900, the correction algorithm that is configured to at least partly compensate for a response time of the temperature sensor can selectively be switched on and off, depending on the variance of the raw temperature data. Furthermore, the temperature is additionally corrected by subtracting the self-heating temperature. This results in a highly efficient and precise determination of the temperature. Thus, it will be appreciated by those skilled in the art that the present invention can be embodied in other specific forms without departing from its scope as defined in the appended claims.

In summary, it is to be noted that the invention provides highly beneficial methods and devices for determining temperatures in HVAV system.

## Claims

1. Method for determining a temperature in a heating, ventilation, and/or air conditioning system, comprising the steps of:

   a) repeatedly measuring the temperature with a temperature sensor to acquire time-resolved raw temperature data;
   b) processing the acquired raw temperature data with a correction algorithm that is configured to at least partly compensate for a response time of the temperature sensor at least in selected time periods, to provide processed temperature data;
   c) making available the processed temperature data via a user interface, via a machine interface and/or on a data storage medium.

2. Method according to claim 1, whereby a statistical parameter, especially the variance, of a set of several most recent temperature values from the raw temperature data is calculated and the correction algorithm is configured such that:

   (i) in time periods in which the statistical parameter, especially the variance, of the set is equal to or above a predefined threshold, the acquired raw temperature data is at least partly compensated for a response time of the temperature sensor in step b); and
   (ii) in other time periods, in which the statistical parameter, especially the variance, of the set is below the predefined threshold, the acquired raw temperature data in step b) is less compensated for a response time of the temperature sensor than under item (i), or the acquired raw temperature data in step b) is not compensated for a response time of the temperature sensor.

3. Method according to any of claims 1 - 2, whereby the raw temperature data acquired in step a) and processed in step b) and/or the processed temperature data of step b) in addition are converted with a further correction algorithm that is configured for at least partly compensating a self-heating of the temperature sensor.

4. Method according to claim 3, whereby a self-hating temperature is calculated and subtracted from the raw temperature data acquired in step a) and processed in step b) and/or from the processed temperature data of step b).

5. Method according to any of claims 3 - 4, whereby the compensation of the self-heating is calculated taking into account at least one environmental parameter, especially at least two environmental parameters, whereby, the at least one environmental parameter is selected from ambient temperature, supply voltage, humidity, and/or airflow.

6. Method according to any of claims 3 - 5, whereby the further correction algorithm is configured such that the compensation is linearly dependent on the at least one environmental parameter, especially linearly dependent on at least two environmental parameters.

7. Method according to claim 3 - 6, whereby the further correction algorithm is configured such that the self-heating temperature $T_{SH}$ is calculated according to the following formula (I):

$$T_{SH}(y,z) = p_{00} + p_{10}y + p_{01}z \qquad (I)$$

whereby $p_{00}$, $p_{10}$, and $p_{01}$ are constant coefficients;
y is a first environmental parameter, especially the ambient temperature;
z is a second environmental parameter, especially the supply voltage;
and whereby the calculated self-heating temperature $T_{SH}$ is subtracted from the raw temperature data acquired in step a) and processed in step b) and/or from the processed temperature data of step b).

8. Method according to any of claims 1 - 7, whereby in time periods other than the selected time periods of step b) in which the acquired raw temperature data is processed with the correction algorithm that is configured to at least partly compensate for a response time of the temperature sensor, the processed temperature in step b) is set equal to the raw temperature data and/or to the raw temperature data processed with the further correction algorithm.

9. Method according to any of claims 1 - 8, whereby the correction algorithm that is configured to at least partly compensate for a response time of the temperature sensor is a recursive filter.

10. Method according to any of claims 1 - 9, whereby, at least in the selected time periods, a latest value of the processed temperature data is calculated based on:

(i) the latest value of the time-resolved raw temperature data or the latest value of the time-resolved raw temperature data processed with the further correction algorithm, and based on
(ii) at least one previous temperature value of the processed temperature data and/or based on at least one previous temperature value of the time-resolved raw temperature data or at least one previous temperature value of the time-resolved raw temperature data processed with the further correction algorithm.

11. Method according to any of claims 9 - 10, whereby the latest value $u_c(n)$ of the processed temperature data is calculated based on the following formula (II):

$$u_c(n) = a_0 x(n) + a_1 x(n-1) + b_1 u_c(n-1) \qquad (II)$$

where $a_0$, $a_1$ and $b_1$ are recursion coefficients;
x(n) is the latest value of the time-resolved raw temperature data or the latest value of the time-resolved raw temperature data processed with the further correction algorithm;
x(n-1) is the previous value of the time-resolved raw temperature data or the previous value of the time-resolved raw temperature data processed with the further correction algorithm;
$u_c$(n-1) is the previously calculated temperature value.

12. Method according to claim 11, whereby the recursion coefficients $a_0$, $a_1$ and $b_1$ are determined by (i) the temperature response time of the temperature sensor in a given environment, (ii) a sampling rate of the temperature sensor and/or (iii) a desired accelerator factor of the response time of the temperature response time of temperature sensor.

13. Method according to any of claims 11 - 12, whereby $a_0$, $a_1$ and $b_1$ are defined according to the following formulas (III), (IV), and (V):

$$a_0 = \frac{2T + T_S}{2\alpha T + T_S} \qquad \text{(III)}$$

$$a_1 = \frac{2T - T_S}{2\alpha T + T_S} \qquad \text{(IV)}$$

$$b_1 = \frac{2\alpha T - T_S}{2\alpha T + T_S} \qquad \text{(V)}$$

whereby T = temperature response time of temperature sensor in a given environment;
$T_S$ = sampling rate of the temperature sensor;
$\alpha$ = accelerator factor, whereby $0 < \alpha < 1$.

14. Device of a heating, ventilation, and/or air conditioning system comprising means adapted to execute the steps of the method of any of claims 1 - 13; whereby the means comprise (i) a temperature sensor, (ii) a controller which is configured for executing the steps of the method of any of claims 1 - 13, and (iii) a user interface, a machine interface and/or a data storage medium for making available the processed temperature data.

15. Device according to claim 14, whereby the device is a room unit for an HVAC system comprising:

a) a housing, whereby the housing preferably comprises a mounting plate, for mounting the room unit on a wall of a building;
b) a connection means to connect the device to the HVAC system;
c) at least one temperature sensor to measure the temperature of ambient air.

16. Room unit according to claim 15 whereby the housing, especially the front housing part, comprises a user interface with a display which is configured for presenting the corrected temperature data.

17. A computer program comprising instructions to cause the controller of the device of any of claims 14 -16 to execute the steps of the method of any of claims 1 - 13.

**Patentansprüche**

1. Verfahren zur Bestimmung einer Temperatur in einer Heizungs-, Lüftungs- und/oder Klimaanlage, umfassend die Schritte:

a) wiederholtes Messen der Temperatur mit einem Temperatursensor, um zeitaufgelöste Rohtemperaturdaten zu erfassen;
b) Verarbeiten der erfassten Rohtemperaturdaten mit einem Korrekturalgorithmus, der dazu ausgebildet ist, eine Ansprechzeit des Temperatursensors zumindest in ausgewählten Zeiträumen zumindest teilweise zu kompensieren, um verarbeitete Temperaturdaten bereitzustellen;
c) Bereitstellen der verarbeiteten Temperaturdaten über eine Benutzerschnittstelle, über eine Maschinenschnittstelle und/oder auf einem Datenträger.

2. Verfahren nach Anspruch 1, wobei ein statistischer Parameter, insbesondere die Varianz, eines Satzes mehrerer jüngster Temperaturwerte aus den Rohtemperaturdaten berechnet wird und der Korrekturalgorithmus derart ausgebildet ist, dass:

(i) in Zeiträumen, in denen der statistische Parameter, insbesondere die Varianz, des Satzes gleich oder über einem vordefinierten Schwellenwert liegt, die erfassten Rohtemperaturdaten für eine Ansprechzeit des Temperatursensors in Schritt b) zumindest teilweise kompensiert werden; und
(ii) in anderen Zeiträumen, in denen der statistische Parameter, insbesondere die Varianz, des Satzes unter dem vordefinierten Schwellenwert liegt, die erfassten Rohtemperaturdaten in Schritt b) für eine Ansprechzeit des Temperatursensors weniger kompensiert werden als unter Punkt (i), oder die erfassten Rohtemperaturdaten in Schritt b) für eine Ansprechzeit des Temperatursensors nicht kompensiert werden.

3. Verfahren nach einem der Ansprüche 1 - 2, wobei die in Schritt a) erfassten und in Schritt b) verarbeiteten Rohtemperaturdaten und/oder die verarbeiteten Temperaturdaten von Schritt b) zusätzlich mit einem weiteren Korrekturalgorithmus umgesetzt werden, der dazu ausgebildet ist, eine Eigenerwärmung des Temperatursensors zumindest teilweise zu kompensieren.

4. Verfahren nach Anspruch 3, wobei eine Eigenerwärmungstemperatur berechnet und von den in Schritt a) erfassten und in Schritt b) verarbeiteten Rohtemperaturdaten und/oder von den verarbeiteten Temperaturdaten von Schritt b) subtrahiert wird.

5. Verfahren nach einem der Ansprüche 3 - 4, wobei die Kompensation der Eigenerwärmung unter Berücksichtigung mindestens eines Umgebungsparameters, insbesondere mindestens zweier Umgebungsparameter, berechnet wird, wobei der mindestens eine Umgebungsparameter ausgewählt ist aus Umgebungstemperatur, Versorgungsspannung, Feuchtigkeit und/oder Luftströmung.

6. Verfahren nach einem der Ansprüche 3 - 5, wobei der weitere Korrekturalgorithmus derart ausgebildet ist, dass die Kompensation linear von dem mindestens einen Umgebungsparameter abhängt, insbesondere linear von mindestens zwei Umgebungsparametern abhängt.

7. Verfahren nach Anspruch 3 - 6, wobei der weitere Korrekturalgorithmus derart ausgebildet ist, dass die Eigenerwärmungstemperatur $T_{SH}$ gemäß der folgenden Formel (I) berechnet wird:

$$T_{SH}(y,z) = p_{00} + p_{10}y + p_{01}z \qquad \text{(I)}$$

wobei $p_{00}$, $p_{10}$ und $p_{01}$ konstante Koeffizienten sind;
y ein erster Umgebungsparameter ist, insbesondere die Umgebungstemperatur;
z ein zweiter Umgebungsparameter ist, insbesondere die Versorgungsspannung;
und wobei die berechnete Eigenerwärmungstemperatur $T_{SH}$ von den in Schritt a) erfassten und in Schritt b) verarbeiteten Rohtemperaturdaten und/oder von den verarbeiteten Temperaturdaten von Schritt b) subtrahiert wird.

8. Verfahren nach einem der Ansprüche 1 - 7, wobei in anderen Zeiträumen als den ausgewählten Zeiträumen von Schritt b), in denen die erfassten Rohtemperaturdaten mit dem Korrekturalgorithmus verarbeitet werden, der dazu ausgebildet ist, eine Ansprechzeit des Temperatursensors zumindest teilweise zu kompensieren, die verarbeitete Temperatur in Schritt b) gleich den Rohtemperaturdaten und/oder den mit dem weiteren Korrekturalgorithmus verarbeiteten Rohtemperaturdaten eingestellt wird.

9. Verfahren nach einem der Ansprüche 1 - 8, wobei der Korrekturalgorithmus, der dazu ausgebildet ist, eine Ansprechzeit des Temperatursensors zumindest teilweise zu kompensieren, ein rekursiver Filter ist.

10. Verfahren nach einem der Ansprüche 1 - 9, wobei zumindest in den ausgewählten Zeiträumen ein letzter Wert der verarbeiteten Temperaturdaten berechnet wird basierend auf:

(i) dem letzten Wert der zeitaufgelösten Rohtemperaturdaten oder dem letzten Wert der mit dem weiteren Korrekturalgorithmus verarbeiteten zeitaufgelösten Rohtemperaturdaten, und basierend auf
(ii) zumindest einem vorherigen Temperaturwert der verarbeiteten Temperaturdaten und/oder basierend auf zumindest einem vorherigen Temperaturwert der zeitaufgelösten Rohtemperaturdaten oder zumindest einem vorherigen Temperaturwert der mit dem weiteren Korrekturalgorithmus verarbeiteten zeitaufgelösten Rohtemperaturdaten.

11. Verfahren nach einem der Ansprüche 9 - 10, wobei der letzte Wert $u_c(n)$ der verarbeiteten Temperaturdaten basierend auf der folgenden Formel (II) berechnet wird:

$$u_c(n) = a_0 x(n) + a_1 x(n-1) + b_1 u_c(n-1) \qquad \text{(II)}$$

wobei $a_0$, $a_1$ und $b_1$ Rekursionskoeffizienten sind;

x(n) der letzte Wert der zeitaufgelösten Rohtemperaturdaten oder der letzte Wert der mit dem weiteren Korrekturalgorithmus verarbeiteten zeitaufgelösten Rohtemperaturdaten ist;

x(n-1) der vorherige Wert der zeitaufgelösten Rohtemperaturdaten oder der vorherige Wert der mit dem weiteren Korrekturalgorithmus verarbeiteten zeitaufgelösten Rohtemperaturdaten ist;

$u_c$(n-1) der zuvor berechnete Temperaturwert ist.

12. Verfahren nach Anspruch 11, wobei die Rekursionskoeffizienten $a_0$, $a_1$ und $b_1$ durch (i) die Temperaturansprechzeit des Temperatursensors in einer gegebenen Umgebung, (ii) eine Abtastrate des Temperatursensors und/oder (iii) einen gewünschten Beschleunigungsfaktor der Ansprechzeit der Temperaturansprechzeit des Temperatursensors bestimmt werden.

13. Verfahren nach einem der Ansprüche 11 - 12, wobei $a_0$, $a_1$ und $b_1$ gemäß den folgenden Formeln (III), (IV) und (V) definiert sind:

$$a_0 = \frac{2T + T_S}{2\alpha T + T_S} \qquad (III)$$

$$a_1 = \frac{2T - T_S}{2\alpha T + T_S} \qquad (IV)$$

$$b_1 = \frac{2\alpha T - T_S}{2\alpha T + T_S} \qquad (V)$$

wobei T = Temperaturansprechzeit des Temperatursensors in einer gegebenen Umgebung;

$T_S$ = Abtastrate des Temperatursensors;

$\alpha$ = Beschleunigungsfaktor, wobei $0 < \alpha < 1$.

14. Vorrichtung einer Heizungs-, Lüftungs- und/oder Klimaanlage, umfassend Mittel, die angepasst sind, um die Schritte des Verfahrens nach einem der Ansprüche 1 bis 13 auszuführen; wobei die Mittel (i) einen Temperatursensor, (ii) eine Steuerung, die konfiguriert ist, um die Schritte des Verfahrens nach einem der Ansprüche 1 bis 13 auszuführen, und (iii) eine Benutzerschnittstelle, eine Maschinenschnittstelle und/oder einen Datenträger zum Bereitstellen der verarbeiteten Temperaturdaten umfassen.

15. Vorrichtung nach Anspruch 14, wobei die Vorrichtung eine Raumeinheit für ein HLK-System ist, umfassend:

a) ein Gehäuse, wobei das Gehäuse vorzugsweise eine Montageplatte zum Montieren der Raumeinheit an einer Wand eines Gebäudes umfasst;

b) ein Verbindungsmittel zum Verbinden der Vorrichtung mit dem HLK-System;

c) mindestens einen Temperatursensor zum Messen der Temperatur der Umgebungsluft.

16. Raumeinheit nach Anspruch 15, wobei das Gehäuse, insbesondere das vordere Gehäuseteil, eine Benutzerschnittstelle mit einer Anzeige umfasst, die konfiguriert ist, um die korrigierten Temperaturdaten darzustellen.

17. Computerprogramm, umfassend Anweisungen, um die Steuerung der Vorrichtung nach einem der Ansprüche 14 bis 16 zu veranlassen, die Schritte des Verfahrens nach einem der Ansprüche 1 bis 13 auszuführen.

**Revendications**

1. Procédé de détermination d'une température dans un système de chauffage, de ventilation et/ou de climatisation, comprenant les étapes suivantes:

a) mesure répétée de la température par le biais d'un capteur de température pour acquérir des données de température brutes résolues en temps;

b) traitement des données de température brutes acquises par le biais d'un algorithme de correction qui est configuré pour compenser au moins partiellement un temps de réponse du capteur de température au moins pendant des périodes de temps sélectionnées, afin de fournir des données de température traitées;

c) mise à disposition des données de température traitées par le biais d'une interface utilisateur, par le biais d'une interface machine et/ou sur un support de stockage de données.

2. Procédé selon la revendication 1, dans lequel un paramètre statistique, en particulier la variance, d'un ensemble de plusieurs valeurs de température les plus récentes à partir des données de température brutes est calculé et l'algorithme de correction est configuré de telle sorte que:

(i) au cours de périodes de temps durant lesquelles le paramètre statistique, en particulier la variance, de l'ensemble est égal ou supérieur à un seuil prédéfini, les données de température brutes acquises sont au moins partiellement compensées pour un temps de réponse du capteur de température à l'étape b); et

(ii) au cours d'autres périodes de temps durant lesquelles le paramètre statistique, en particulier la variance, de l'ensemble est inférieur au seuil prédéfini, les données de température brutes acquises à l'étape b) sont moins compensées pour un temps de réponse du capteur de température que sous l'élément (i), ou les données de température brutes acquises à l'étape b) ne sont pas compensées pour un temps de réponse du capteur de température.

3. Procédé selon l'une des revendications 1 à 2, dans lequel les données de température brutes acquises à l'étape a) et traitées à l'étape b) et/ou les données de température traitées de l'étape b) sont en outre converties par le biais d'un autre algorithme de correction qui est configuré pour compenser au moins partiellement un auto-échauffement du capteur de température.

4. Procédé selon la revendication 3, dans lequel une température d'auto-échauffement est calculée et soustraite des données de température brutes acquises à l'étape a) et traitées à l'étape b) et/ou des données de température traitées de l'étape b).

5. Procédé selon l'une des revendications 3 à 4, dans lequel la compensation de l'auto-échauffement est calculée en tenant compte d'au moins un paramètre environnemental, en particulier d'au moins deux paramètres environnementaux, dans lequel l'au moins un paramètre environnemental est sélectionné parmi la température ambiante, la tension d'alimentation, l'humidité et/ou le débit d'air.

6. Procédé selon l'une des revendications 3 à 5, dans lequel l'autre algorithme de correction est configuré de telle sorte que la compensation dépend linéairement de l'au moins un paramètre environnemental, en particulier dépend linéairement d'au moins deux paramètres environnementaux.

7. Procédé selon la revendication 3 à 6, dans lequel l'autre algorithme de correction est configuré de telle sorte que la température d'auto-échauffement $T_{SH}$ est calculée selon la formule (I) suivante:

$$T_{SH}(y, z) = p_{00} + p_{10}y + p_{01}z \qquad (I)$$

dans laquelle $p_{00}$, $p_{10}$ et $p_{01}$ sont des coefficients constants;

y est un premier paramètre environnemental, en particulier la température ambiante;

z est un deuxième paramètre environnemental, en particulier la tension d'alimentation;

et dans laquelle la température d'auto-échauffement $T_{SH}$ calculée est soustraite des données de température brutes acquises à l'étape a) et traitées à l'étape b) et/ou des données de température traitées de l'étape b).

8. Procédé selon l'une des revendications 1 à 7, dans lequel, au cours de périodes de temps autres que les périodes de temps sélectionnées de l'étape b) durant lesquelles les données de température brutes acquises sont traitées par le biais de l'algorithme de correction qui est configuré pour compenser au moins partiellement un temps de réponse du capteur de température, la température traitée à l'étape b) est définie comme étant égale aux données de température brutes et/ou aux données de température brutes traitées par le biais de l'autre algorithme de correction.

9. Procédé selon l'une des revendications 1 à 8, dans lequel l'algorithme de correction qui est configuré pour compenser au moins partiellement un temps de réponse du capteur de température est un filtre récursif.

**10.** Procédé selon l'une des revendications 1 à 9, dans lequel, au moins pendant les périodes de temps sélectionnées, une dernière valeur des données de température traitées est calculée sur la base de:

(i) la dernière valeur des données de température brutes résolues en temps ou la dernière valeur des données de température brutes résolues en temps traitées par le biais de l'autre algorithme de correction, et sur la base de (ii) au moins une valeur de température précédente des données de température traitées et/ou sur la base d'au moins une valeur de température précédente des données de température brutes résolues en temps ou d'au moins une valeur de température précédente des données de température brutes résolues en temps traitées par le biais de l'autre algorithme de correction.

**11.** Procédé selon l'une des revendications 9 à 10, dans lequel la dernière valeur $u_c(n)$ des données de température traitées est calculée sur la base de la formule (II) suivante:

$$u_c(n) = a_0 x(n) + a_1 x(n - 1) + b_1 u_c(n - 1) \qquad \text{(II)}$$

où $a_0$, $a_1$ et $b_1$ sont des coefficients de récursion;
$x(n)$ est la dernière valeur des données de température brutes résolues en temps ou la dernière valeur des données de température brutes résolues en temps traitées par le biais de l'autre algorithme de correction;
$x(n-1)$ est la valeur précédente des données de température brutes résolues en temps ou la valeur précédente des données de température brutes résolues en temps traitées par le biais de l'autre algorithme de correction; $u_c(n-1)$ est la valeur de température précédemment calculée.

**12.** Procédé selon la revendication 11, dans lequel les coefficients de récursion $a_0$, $a_1$ et $b_1$ sont déterminés par (i) le temps de réponse thermique du capteur de température dans un environnement donné, (ii) une fréquence d'échantillonnage du capteur de température et/ou (iii) un facteur d'accélération souhaité du temps de réponse du temps de réponse thermique du capteur de température.

**13.** Procédé selon l'une des revendications 11 à 12, dans lequel $a_0$, $a_1$ et $b_1$ sont définis selon les formules (III), (IV) et (V) suivantes:

$$a_0 = \frac{2T + T_S}{2\alpha T + T_S} \qquad \text{(III)}$$

$$a_1 = \frac{2T - T_S}{2\alpha T + T_S} \qquad \text{(IV)}$$

$$b_1 = \frac{2\alpha T - T_S}{2\alpha T + T_S} \qquad \text{(V)}$$

où $T$ est le temps de réponse thermique du capteur de température dans un environnement donné;
$T_S$ est la fréquence d'échantillonnage du capteur de température;
$\alpha$ est le facteur d'accélération, où $0 < \alpha < 1$.

**14.** Dispositif d'un système de chauffage, de ventilation et/ou de climatisation comprenant des moyens adaptés pour exécuter les étapes du procédé selon l'une des revendications 1 à 13; dans lequel les moyens comprennent (i) un capteur de température, (ii) un contrôleur configuré pour exécuter les étapes du procédé selon l'une des revendications 1 à 13, et (iii) une interface utilisateur, une interface machine et/ou un support de stockage de données pour la mise à disposition des données de température traitées.

**15.** Dispositif selon la revendication 14, dans lequel le dispositif est une unité d'ambiance pour un système CVC comprenant:

a) un boîtier, dans lequel le boîtier comprend de préférence une plaque de montage, pour le montage de l'unité d'ambiance sur un mur d'un bâtiment;

b) un moyen de connexion pour connecter le dispositif au système CVC;

c) au moins un capteur de température pour mesurer la température de l'air ambiant.

16. Unité d'ambiance selon la revendication 15, dans lequel le boîtier, en particulier la partie de boîtier avant, comprend une interface utilisateur avec un affichage qui est configuré pour présenter les données de température corrigées.

17. Programme informatique comprenant des instructions pour amener le contrôleur du dispositif selon l'une des revendications 14 à 16 à exécuter les étapes du procédé selon l'une des revendications 1 à 13.

**Fig. 1**

Fig. 2

Fig. 3

Fig. 4

**Fig. 5**

**Fig. 6**

**Fig. 7**

**Fig. 8**

**Fig. 9**

**Fig. 10**

**Fig. 11**

60

1

**Fig. 12**

60'

1'

**Fig. 13**

**Fig. 14**

**Fig. 15**

Fig. 16

800

801

802

803

## Fig. 17

**Self-heating best fit plane**

self-heating [°C]

supply voltage [VDC]

temperature [°C]

## Fig. 18

900

901

902

903

904

905

Fig. 19

**EP 4 445 077 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8197130 B2, Siemens

- US 2017059190 A1, Google Inc.